(19) Europäisches Patentamt
European Patent Office
Office européen des brevets

(11) **EP 4 127 789 B1**

(12) **EUROPEAN PATENT SPECIFICATION**

(45) Date of publication and mention
of the grant of the patent:
**30.04.2025   Bulletin 2025/18**

(21) Application number: **21713018.6**

(22) Date of filing: **22.03.2021**

(51) International Patent Classification (IPC):
**G02B 5/18** *(2006.01)*      **G02B 27/00** *(2006.01)*
**G02B 27/01** *(2006.01)*

(52) Cooperative Patent Classification (CPC):
**G02B 5/1809; G02B 5/1861; G02B 5/1866;**
**G02B 27/0081;** G02B 27/0172; G02B 2027/0112;
G02B 2027/0123; G02B 2027/0178

(86) International application number:
**PCT/EP2021/057273**

(87) International publication number:
**WO 2021/191150 (30.09.2021 Gazette 2021/39)**

(54) **UNPOLARIZED LIGHT GRATING IN-COUPLER**

UNPOLARISIERTES LICHTGITTER IN EINEM KOPPLER

COUPLEUR DE RÉSEAU DE DIFFRACTION DE LUMIÈRE NON POLARISÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **23.03.2020   EP 20315043**

(43) Date of publication of application:
**08.02.2023   Bulletin 2023/06**

(73) Proprietor: **InterDigital CE Patent Holdings, SAS
75017 Paris (FR)**

(72) Inventors:
• **SHRAMKOVA, Oksana
35576 Cesson-Sévigné (FR)**

• **DRAZIC, Valter
35576 Cesson-Sévigné (FR)**
• **BLONDE, Laurent
35576 Cesson-Sévigné (FR)**

(74) Representative: **AWA Sweden AB
Box 5117
200 71 Malmö (SE)**

(56) References cited:
EP-A1- 3 540 479        WO-A2-2007/031991
WO-A2-2009/083977    US-A1- 2019 121 239
US-B1- 10 534 115

**Description**

**BACKGROUND**

The present disclosure relates to the field of optics and photonics, and more specifically to planar optical devices. More particularly, but not exclusively, the present disclosure relates to diffraction gratings that can be used in a wide range of devices, such as, among other examples, displays, including in- and out-coupling of light in waveguides for eyewear electronic devices and head-mounted displays for AR (Augmented Reality) and VR (Virtual Reality) glasses, head up displays (HUD), as for example in the automotive industry, optical sensors for photo/video/lightfield cameras, bio/chemical sensors, including lab-on-chip sensors, microscopy, spectroscopy and metrology systems, and solar panels.

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

AR/VR glasses are under consideration for a new generation of human-machine interface. Development of AR/VR glasses (and more generally eyewear electronic devices) is associated with a number of challenges, including reduction of size and weight of such devices as well as improvement of the image quality (in terms of contrast, field of view, color depth, etc.) that should be realistic enough to enable a truly immersive user experience.

The tradeoff between the image quality and physical size of the optical components motivates research into ultra-compact optical components that can be used as building blocks for more complex optical systems, such as AR/VR glasses. It is desirable for such optical components to be easy to fabricate and replicate. In such AR/VR glasses, various types of refractive and diffractive lenses and beam-forming components are used to guide the light from a micro-display or a projector towards the human eye, allowing forming a virtual image that is superimposed with an image of the physical world seen with a naked eye (in case of AR glasses) or captured by a camera (in case of VR glasses).

Some of kinds of AR/VR glasses utilize an optical waveguide wherein light propagates into the optical waveguide by TIR (for Total Internal Reflection) only over a limited range of internal angles. The FoV (for Field of View) of the waveguide depends on the material of the waveguide, among other factors.

In WO2017180403, a waveguide with extended field of view is proposed wherein a dual mode image propagation is used. In this method, the diffraction mode +1 is used to carry the right hand side image (negative angles of incidence on the in-coupler) in one direction and the -1 mode is used to propagate the positive angles of incidence into the opposite direction into the waveguide. Combining both half images is done thanks to the pupil expanders and out-couplers at the exit of the waveguide so that the user sees one single image. The goal of the system is to double the field of view since each half image can use the whole angular bandwidth of the waveguide in each direction of propagation.

Some optical waveguides include one or more diffraction gratings. The diffracting structure's period d (also known as grating pitch) may be selected based on the wavelength $\lambda$ of the incident light and on the refractive index $n_3$ of the material of the waveguide. For example, it may be desirable to select the grating pitch d to be twice the wavelength of the light in the waveguide medium, as follows:

$$d = \frac{2 \times \lambda}{n_3 + 1} \qquad\qquad \text{(Eq. 1)}$$

If we consider the ratio between the grating's pitch and the wavelength: $d/\lambda$, in the case of equation 1 presented above, we can put that $3/2 < n_2 < 2$ and $2/3 < d/\lambda < 4/5$ and in any case $d/\lambda < 1$ a value that can be qualified as being sub-wavelength. Equation 1 in any case implies that the diffraction grating has a sub-wavelength structure.

In US20160231568, a waveguide for a wearable display is disclosed wherein the grating's pitch of the structure is between 250 and 500nm.

Very small-pitch gratings can be difficult to fabricate. Gratings with sufficiently small pitch are out of reach of photo lithographic techniques when the structure is sub-wavelength, and the desired precision challenges even electron-beam lithography technology.

An overview of the available concepts for the design of optical waveguides reveals the lack of a reliable solution capable of providing intensive response for both polarizations (transverse electric, TE, and transverse magnetic, TM) simultaneously. It is thus desirable to provide diffraction gratings for use with optical waveguides or in other optical components. It is further desirable for such diffraction gratings to be operable with a micro display or other illumination source that uses unpolarized and/or incoherent light, such as a digital light processor, DLP, a display based on organic light-emitting diodes, OLEDs, or a display using unpolarized laser beams. US 10 534 115 B1 discloses a method of fabricating an optical devices using three-dimensional electron-beam lithography, wherein the optical device is an output grating of a decoupling element for a near-eye display, that has a variable linewidth for angular selectivity.

**EP 4 127 789 B1**

## SUMMARY

References in the specification to "one embodiment," "an embodiment," "an example embodiment," and the like indicate that the embodiment described may include a particular feature, structure, or characteristic; but not every embodiment necessarily includes that particular feature, structure, or characteristic. Moreover, such phrases are not necessarily referring to the same embodiment. Further, when a particular feature, structure, or characteristic is described in connection with an embodiment, such feature, structure, or characteristic may be used in connection with other embodiments whether or not explicitly described.

A diffractive element according to claim 1 includes a substrate and a plurality of grating elements on the substrate, each grating element having a u-shaped cross section. Each grating element includes: a first ridge region; a second ridge region; and a saddle region extending between the first and second ridge regions, the saddle region having a first height ($H_1$) lower than a second height ($H_3$) of the first and second ridge regions.

Further, according to claim 1, the first ridge region comprises a first ridge body region with a first refractive index ($n_2$) and a first core element inside the first ridge body region, the first core element having a second refractive index ($n_4$) greater than the first refractive index, and the second ridge region comprises a second ridge body region with the first refractive index ($n_2$) and a second core element inside the second ridge body region, the second core element having the second refractive index ($n_4$).

In some embodiments, the first and second core elements are in contact with the substrate.

In some embodiments, the substrate has a third refractive index ($n_3$) that is less than the first refractive index ($n_2$).

In some embodiments, the grating elements are arranged periodically on the substrate with a grating pitch.

In some embodiments, the saddle region has a first width ($W_4$), the ridge regions each have a second width ($W_3$), and the sum of the first width ($W_4$) and twice the second width ($W_3$) is less than the grating pitch.

In some embodiments, the first ridge region, the second ridge region, and the saddle region comprise titanium dioxide ($TiO_2$).

In some embodiments, between consecutive grating elements in the diffractive element, the substrate is in contact with ambient air.

In some embodiments, the substrate is a waveguide of a waveguide display.

A method according to claim 9 comprises directing light having a first wavelength ($\lambda$) onto a diffractive element. The diffractive element comprises a substrate and a plurality of grating elements on the substrate, each grating element having a u-shaped cross section. Each grating element comprises: a first ridge region; a second ridge region; and a saddle region extending between the first and second ridge regions, the saddle region having a first height ($H_1$) lower than a second height ($H_3$) of the first and second ridge regions.

In some embodiments, the substrate has a third refractive index ($n_5$), and the method further comprises diffracting the light to a diffractive order $M_2$, and wherein the grating elements are arranged substantially periodically with a pitch between $\dfrac{M_2}{n_5}\lambda$ and $\dfrac{M_2}{0.8\,n_5}\lambda$. In some such embodiments, $M_2 = 2$.

Further, according to claim 9, the first ridge region comprises a first ridge body region with a first refractive index ($n_2$) and a first core element inside the first ridge body region, the first core element having a second refractive index ($n_4$) greater than the first refractive index, and the second ridge region comprises a second ridge body region with the first refractive index ($n_2$) and a second core element inside the second ridge body region, the second core element having the second refractive index ($n_4$).

In some embodiments, the saddle region has a first width ($W_4$), the ridge regions each have a second width ($W_3$), and the sum of the first width ($W_4$) and twice the second width ($W_3$) is less than the grating pitch.

In some embodiments, the first ridge region, the second ridge region, and the saddle region comprise titanium dioxide ($TiO_2$).

## BRIEF DESCRIPTION OF THE DRAWINGS

FIG. 1A is a cross-sectional schematic view of a waveguide display.
FIG. 1B is a schematic illustration of a binocular waveguide display with a first layout of diffractive optical components.
FIG. 1C is a schematic illustration of a binocular waveguide display with a second layout of diffractive optical components.
FIG. 1D is a schematic exploded view of a double-waveguide display according to some embodiments.
FIG. 1E is a cross-sectional schematic view of a double-waveguide display according to some embodiments.
FIG. 1F is a schematic cross-sectional view of a double waveguide optical device illustrating angles of incident and in-coupled light.

FIG. 2A is a cross-sectional view depicting an example unit cell geometry for a u-shaped diffraction grating with inserts, in accordance with some embodiments.

FIG. 2B is schematic perspective partial cutaway view of a plurality of u-shaped diffraction grating elements with inserts arranged in a diffraction grating structure.

FIG. 2C is a cross-sectional view of a single-material u-shaped diffraction grating element.

FIG. 2D is a schematic perspective partial cutaway view of a plurality of single-material u-shaped elements arranged in a diffraction grating structure.

FIG. 3A illustrates the diffraction performance of a first grating of an example two-waveguide system configured for a blue color, working with transverse-electric (TE) polarized light of the blue color.

FIG. 3B illustrates the diffraction performance of the first grating of the example two-waveguide system working with transverse-magnetic (TM) polarized light of the blue color.

FIG. 4A illustrates the diffraction performance of a second grating of the example two-waveguide system working with TE polarized light of the blue color.

FIG. 4B illustrates the diffraction performance of the second grating of the example two-waveguide system working with TM polarized light of a blue color.

FIG. 5A illustrates the diffraction performance of the first grating of the example two-waveguide system configured for a blue color, working with TE polarized light of a green color.

FIG. 5B illustrates the diffraction performance of the first grating of the example two-waveguide system configured for a blue color, working with TM polarized light of a green color.

FIG. 6 is a graph of the refractive index for $TiO_2$ for a range of wavelengths.

FIG. 7A illustrates the diffraction performance of a first diffraction grating of an example three-waveguide system, the first diffraction grating configured for a blue color and working with TE polarized light of the blue color, in accordance with some embodiments.

FIG. 7B illustrates the diffraction performance of the first diffraction grating of the example three-waveguide system working with TM polarized light of the blue color, in accordance with some embodiments.

FIG. 8A illustrates the diffraction performance of the first diffraction grating of the example three-waveguide system working with TE polarized light of a green color.

FIG. 8B illustrates the diffraction performance of the first diffraction grating of the example three-waveguide system working with TM polarized light of the green color.

FIG. 9A illustrates the diffraction performance of the first diffraction grating of the example three-waveguide system working with TE polarized light of a red color.

FIG. 9B illustrates the diffraction performance of the first diffraction grating of the example three-waveguide system working with TM polarized light of the red color.

FIG. 10A illustrates the diffraction performance of a second diffraction grating of the example three-waveguide system, the second diffraction grating configured for a green color and working with TE polarized light of the green color, in accordance with some embodiments.

FIG. 10B illustrates the diffraction performance of the second diffraction grating of the example three-waveguide system working with TM polarized light of the green color, in accordance with some embodiments.

FIG. 11A illustrates the diffraction performance of the second diffraction grating of the example three-waveguide system working with TE polarized light of a red color.

FIG. 11B illustrates the diffraction performance of the second diffraction grating of the example three-waveguide system working with TM polarized light of the red color.

FIG. 12A illustrates the diffraction performance of a third diffraction grating of the example three-waveguide system, the third diffraction grating configured for a red color and working with TE polarized light of the red color, in accordance with some embodiments.

FIG. 12B illustrates the diffraction performance of the third diffraction grating of the example 3-waveguide system working with TM polarized light of the red color.

## DETAILED DESCRIPTION

The present disclosure relates to the field of optics and photonics, and more specifically to optical devices comprising at least one diffraction grating. Diffraction gratings as described herein may be employed in the field of conformable and wearable optics, such as AR/VR glasses, as well as in a variety of other electronic consumer products comprising displays and/or lightweight imaging systems. Example devices for application may include head-mounted displays (HMD) and lightfield capture devices. Such diffraction grating modulating the unpolarized light may find application in solar cells.

Example optical devices are described that include one or more over-wavelength diffraction gratings that can be used for in-coupling light into the optical device and/or out coupling light from the optical device. Such optical devices can be used as a waveguide for AR/VR glasses for instance.

In example embodiments, over-wavelength in-coupling gratings can be used to generate intensive high diffraction orders for different polarizations (TE and TM) simultaneously. In contrast to some single-material systems that may provide intensive response only for one polarization (TE or TM, depending on the size of the elements), embodiments with two or more materials as described herein, including some embodiments that use a high refractive index material, may provide a strong response for both polarizations.

Some embodiments aim to provide high performance in terms of brightness for in-coupling light into an optical device.

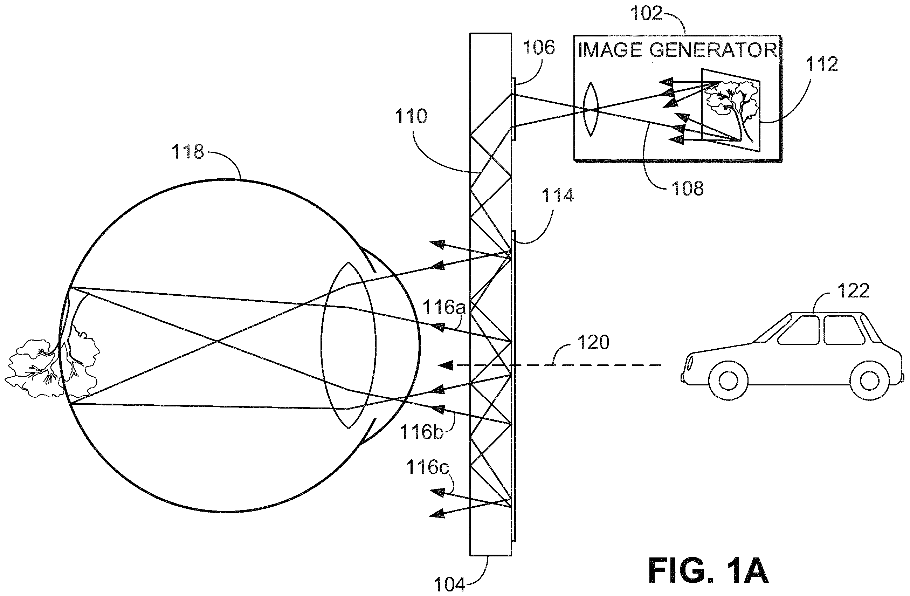

An example waveguide display device that may employ diffraction grating structures as described herein is illustrated in FIG. 1A. FIG. 1A is a schematic cross-sectional side view of a waveguide display device in operation. An image is projected by an image generator 102. The image generator 102 may use one or more of various techniques for projecting an image. For example, the image generator 102 may be a laser beam scanning (LBS) projector, a liquid crystal display (LCD), a light-emitting diode (LED) display (including an organic LED (OLED) or micro LED (μLED) display), a digital light processor (DLP), a liquid crystal on silicon (LCoS) display, or other type of image generator or light engine.

Light representing an image 112 generated by the image generator 102 is coupled into a waveguide 104 by a diffractive in-coupler 106. The in-coupler 106 diffracts the light representing the image 112 into one or more diffractive orders. For example, light ray 108, which is one of the light rays representing a portion of the bottom of the image, is diffracted by the in-coupler 106, and one of the diffracted orders 110 (e.g. the second order) is at an angle that is capable of being propagated through the waveguide 104 by total internal reflection.

At least a portion of the light 110 that has been coupled into the waveguide 104 by the diffractive in-coupler 106 is coupled out of the waveguide by a diffractive out-coupler 114. At least some of the light coupled out of the waveguide 104 replicates the incident angle of light coupled into the waveguide. For example, in the illustration, out-coupled light rays 116a, 116b, and 116c replicate the angle of the in-coupled light ray 108. Because light exiting the out-coupler replicates the directions of light that entered the in-coupler, the waveguide substantially replicates the original image 112. A user's eye 118 can focus on the replicated image.

In the example of FIG. 1A, the out-coupler 114 out-couples only a portion of the light with each reflection allowing a single input beam (such as beam 108) to generate multiple parallel output beams (such as beams 116a, 116b, and 116c). In this way, at least some of the light originating from each portion of the image is likely to reach the user's eye even if the eye is not perfectly aligned with the center of the out-coupler. For example, if the eye 118 were to move downward, beam 116c may enter the eye even if beams 116a and 116b do not, so the user can still perceive the bottom of the image 112 despite the shift in position. The out-coupler 114 thus operates in part as an exit pupil expander in the vertical direction. The waveguide may also include one or more additional exit pupil expanders (not shown in FIG. 1A) to expand the exit pupil in the horizontal direction.

In some embodiments, the waveguide 104 is at least partly transparent with respect to light originating outside the waveguide display. For example, at least some of the light 120 from real-world objects (such as object 122) traverses the waveguide 104, allowing the user to see the real-world objects while using the waveguide display. As light 120 from real-world objects also goes through the diffraction grating 114, there will be multiple diffraction orders and hence multiple images. To minimize the visibility of multiple images, it is desirable for the diffraction order zero (no deviation by 114) to have a great diffraction efficiency for light 120 and order zero, while higher diffraction orders are lower in energy. Thus, in addition to expanding and out-coupling the virtual image, the out-coupler 114 is preferably configured to let through the zero order of the real image. In such embodiments, images displayed by the waveguide display may appear to be superimposed on the real world.

In some embodiments, as described in further detail below, a waveguide display includes more than one waveguide layer. Each waveguide layer may be configured to preferentially convey light with a particular range of wavelengths and/or incident angles from the image generator to the viewer.

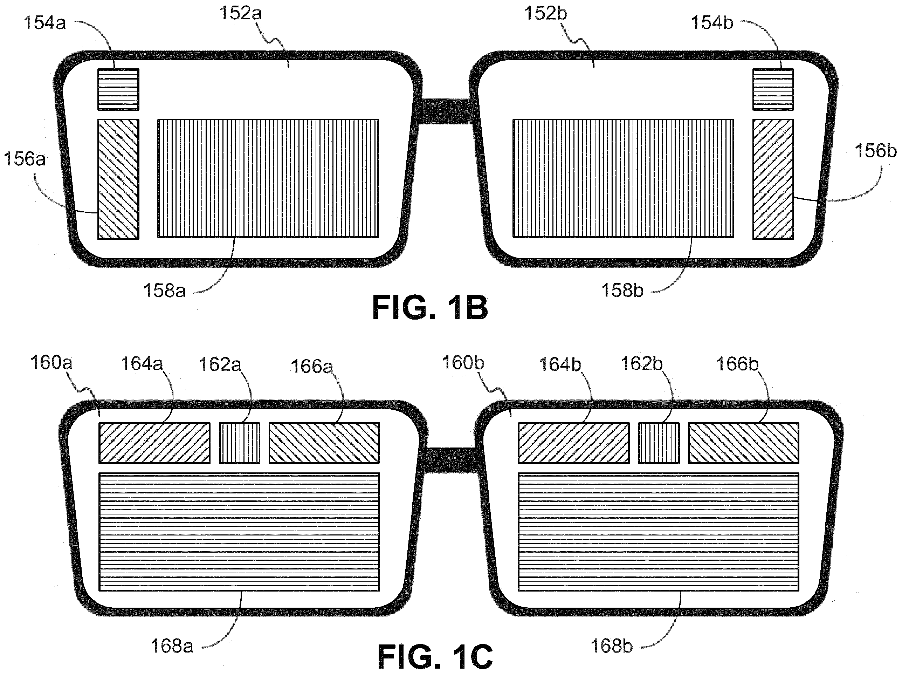

As illustrated in FIGs. 1B and 1C, waveguide displays having in-couplers, out-couplers, and pupil expanders may have various different configurations. An example layout of one binocular waveguide display is illustrated in FIG. 1B. In the example of FIG. 1B, the display includes waveguides 152a, 152b for the left and right eyes, respectively. The waveguides include in-couplers 154a,b, pupil expanders 156a,b, and components 158a,b, which operate as both out-couplers and horizontal pupil expanders. The pupil expanders 156a,b are arranged along an optical path between the in-coupler and the out-coupler. An image generator (not shown) may be provided for each eye and arranged to project light representing an image on the respective in-coupler.

An example layout of another binocular waveguide display is illustrated in FIG.1C. In the example of FIG. 1C, the display includes waveguides 160a, 160b for the left and right eyes, respectively. The waveguides include in-couplers 162a,b. Light from different portions of an image may be coupled by the in-couplers 162a,b to different directions within the waveguides. In-coupled light traveling toward the left passes through pupil expanders 164a,b, while in-coupled light traveling toward the right passes through pupil expanders 166a,b. Having passed through the pupil expanders, light is coupled out of the waveguides using components 168a,b, which operate as both out-couplers and vertical pupil expanders to substantially replicate an image provided at the in-couplers 162a,b.

In different embodiments, different features of the waveguide displays may be provided on different surfaces of the waveguides. For example (as in the configuration of FIG. 1A), the in-coupler and the out-coupler may both be arranged on the anterior surface of the waveguide (away from the user's eye). In other embodiments, the in-coupler and/or the out-coupler may be on a posterior surface of the waveguide (toward the user's eye). The in-coupler and out-coupler may be on opposite surfaces of the waveguide. In some embodiments, one or more of an in-coupler, an out-coupler, and a pupil expander, may be present on both surfaces of the waveguide. The image generator may be arranged toward the anterior surface or toward the posterior surface of the waveguide. The in-coupler is not necessarily on the same side of the waveguide as the image generator. Any pupil expanders in a waveguide may be arranged on the anterior surface, on the posterior surface, or on both surfaces of the waveguide. In displays with more than one waveguide layer, different layers may have different configurations of in-coupler, out-coupler, and pupil expander.

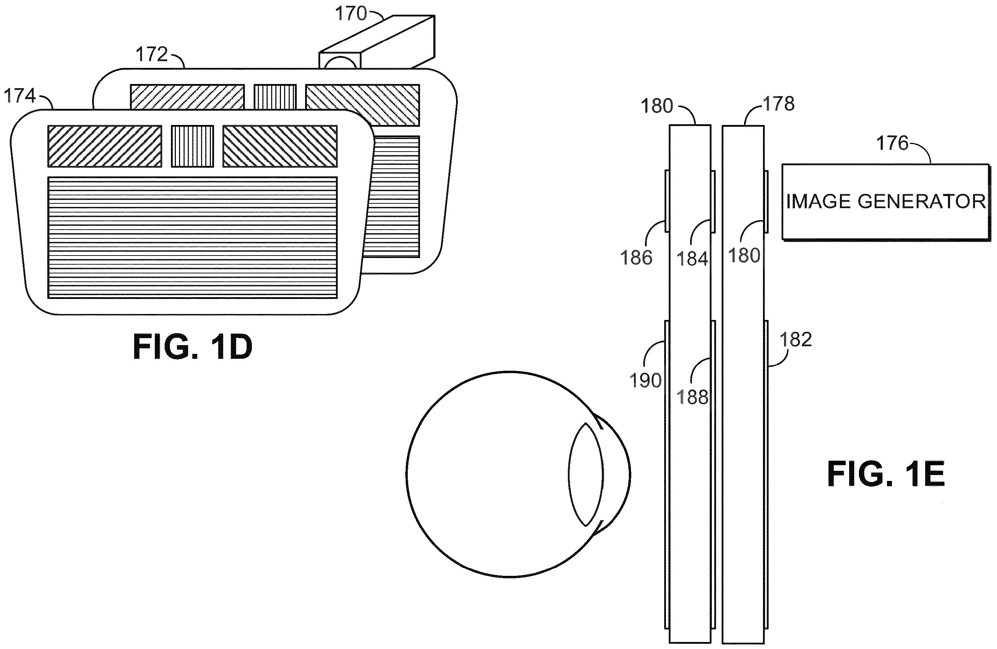

FIG. 1D is a schematic exploded view of a double waveguide display according to some embodiments, including an image generator 170, a first waveguide (WG$_1$) 172, and a second waveguide (WG$_2$) 174. FIG. 1E is a schematic side-view of a double waveguide display according to some embodiments, including an image generator 176, a first waveguide (WG$_1$) 178, and a second waveguide (WG$_2$) 180. The first waveguide includes a first transmissive diffractive in-coupler (DG1) 180 and a first diffractive out-coupler (DG6) 182. The second waveguide has a second transmissive diffractive in-coupler (DG2) 184, a reflective diffractive in-coupler (DG3) 186, a second diffractive out-coupler (DG4) 188, and a third diffractive out-coupler (DG5) 190. Different embodiments may use different arrangements of optical components (such as different arrangements of pupil expanders) on the first and second waveguides.

While FIGs. 1A-1E illustrate the use of waveguides in a near-eye display, the same principles may be used in other display technologies, such as head up displays for automotive or other uses.

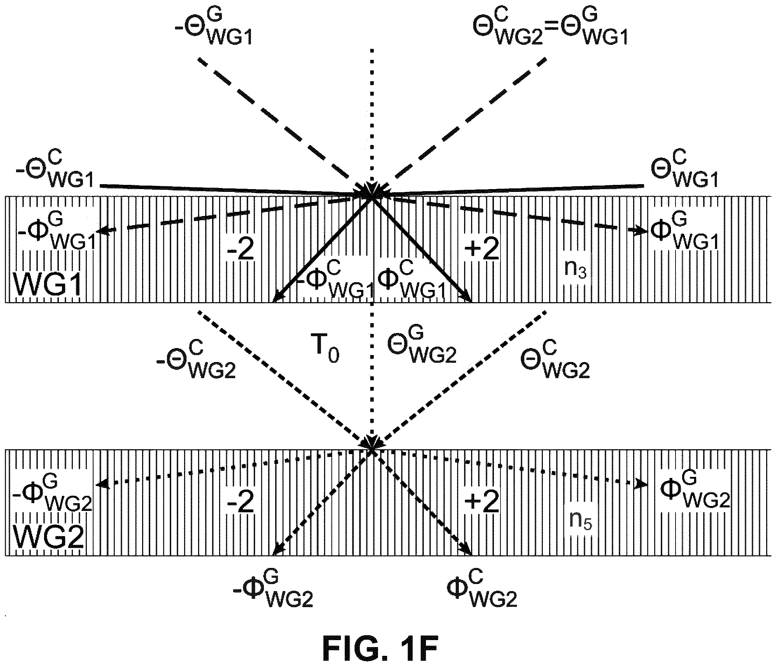

FIG. 1F is a schematic cross-sectional view of a double waveguide optical device illustrating angles of incident and in-coupled light. The grating pitch of one or more diffractive gratings as described herein may be selected based on desired ranges of and relationships between the incident and the in-coupled light.

The double waveguide device of FIG. 1F may use higher order modes (with absolute value of diffraction order higher than 1) and over-wavelength gratings to provide for a high field of view. In FIG. 1F, angles in the air are denoted with the letter $\Theta$. Angles in the waveguide are denoted with the letter $\Phi$ are located into the waveguides and measure the angle of rays that have been diffracted. The superscript C indicates a critical ray, either in air or in the waveguide, and the superscript G indicates a grazing ray.

FIG. 1F illustrates an optical device comprising a first optical waveguide WG1 and a second optical waveguide WG2. WG1 has refractive index $n_3$ and WG2 has refractive index $n_5$. These refractive indices may be the same, or they may be different from one another. Such an optical device is configured for guiding an angular range $[-\Theta_{WG1}^C, \Theta_{WG1}^C]$ of an incident light comprising a range of wavelengths. $\Theta_{WG1}^C$ corresponds to an incident angle of a critical ray diffracted into the first waveguide WG1 using diffractive order M$_1$ at a critical angle $\Phi_{WG1}^C$ defined by $\Phi_{WG1}^C = \frac{1}{n_3}$, wherein $n_3$ is a refractive index of the first waveguide's material. We assume that $n_5$ is a refractive index of the second waveguide's material. For the second waveguide's material we take $\Phi_{WG2}^C = \frac{1}{n_5}$. As illustrated in FIG. 1F, the first waveguide WG1 is placed in front of the second optical waveguide WG2 according to light propagation direction. Incident light is first transmitted or diffracted by the first waveguide WG1 and then the part of the incident light transmitted by the first waveguide WG1 is then transmitted or diffracted by the second waveguide WG2 using diffractive order M$_2$.

The first waveguide comprises a diffraction grating having an over-wavelength grating's pitch which is configured for second orders of diffraction. This allows coupling of very high angles of incidence for the ultra-high field of view into the first waveguide WG1. Without using second order diffraction, coupling very high angles of incidence would be very difficult since it would call for a very small grating pitch.

From FIG. 1F, it can be observed that the angular ranges $[\Theta_{WG1}^G, \Theta_{WG1}^C]$ and $[-\Theta_{WG1}^C, -\Theta_{WG1}^G]$ diffract inside of the first waveguide WG1 into the angular ranges $[\Phi_{WG1}^G, \Phi_{WG1}^C]$ and $[-\Phi_{WG1}^C, -\Phi_{WG1}^G]$. It can be seen that the angular range $[\Theta_{WG1}^G, \Theta_{WG1}^C]$ is a symetric angular range of the angular range $[-\Theta_{WG1}^C, -\Theta_{WG1}^G]$ with respect to the incident axis of the light incident on the optical device.

The angular range between $\left[-\Theta_{WG1}^{G}, \Theta_{WG1}^{G}\right]$, also referenced as transmitted beam $T_0$, transmits through the diffraction grating of the first waveguide WG1 with a high efficiency.

Into the first waveguide WG1, the left hand side of the image will propagate toward the left into the waveguide WG1 while the right hand side of the image will propagate toward the right.

The transmitted beam $T_0$ has an angular extent from $\left[-\Theta_{WG2}^{C}, \Theta_{WG2}^{C}\right]$, the grazing rays being in the vicinity of the normal. The transmitted beam $T_0$ will diffract on a second grating which is on top of the second waveguide WG2 and positive angles of incidence will propagate toward the left in the waveguide WG2 while negative angles of incidence will propagate toward the right into WG2.

The second grating may differ from the first one by having a different pitch size, but the shapes of the first and second gratings may be similar. The shapes of the first and second gratings may be configured to emphasizes nano-jet waves. The second grating in the waveguide WG2 may have an over-wavelength grating pitch configured for second orders of diffraction.

According to some embodiments, the first and second grating are configured through the grating pitch for diffracting the specific respective angular ranges of the light as specified above for a given wavelength of the light as will be shown below.

In some embodiments, the following diffraction equations are used to calculate the pitch sizes $d_1$ and $d_2$ of the diffraction grating of each of the respective two waveguides WG1 and WG2 and the total field of view coupled by the optical device illustrated in FIG. 1 F:

$$n_3 \sin \Phi_{WG1}^{C} + \sin \Theta_{WG1}^{C} = \frac{M\lambda}{d_1}$$

$$n_3 \sin \Phi_{WG1}^{G} + \sin \Theta_{WG1}^{G} = \frac{M\lambda}{d_1}$$

$$n_5 \sin \Phi_{WG2}^{C} + \sin \Theta_{WG2}^{C} = \frac{M\lambda}{d_2}$$

$$n_5 \sin \Phi_{WG2}^{G} + \sin \Theta_{WG2}^{G} = \frac{M\lambda}{d_2}$$

Here we assume that $n_1$=1, wherein $n_1$ is a refractive index of the host material. Some values are known, $\sin \Phi_{WG1}^{C} = \frac{1}{n_3}$, as well as $\sin \Phi_{WG2}^{C} = \frac{1}{n_5}$ and some others are design parameters. According to an embodiment of the present disclosure, $\Phi_{WG1}^{G}$ and $\Phi_{WG2}^{G}$ are chosen to approximately equal 75°.

It should be noted that other values can be selected for design parameters described herein. For example, the values chosen for $\Phi_{WG1}^{G}$ and $\Phi_{WG2}^{G}$ may be chosen according to the distance the image has to travel into the waveguide before being extracted, the number of total internal reflection bounces, and the thickness of the waveguide. It is also to be noted that, in the specific example given above, refractive indexes of respectively the first waveguide and the second waveguide are the same, $n_2$. However, the first and second waveguides may have different refractive indexes in other embodiments.

According to some embodiments disclosed herein, $\Theta_{WG2}^{G}$ is chosen to be -3° for instance. Other values are also possible depending on the design conditions, such as whether it is desired to superimpose the left and right images in the middle of the final image, or if no crossing of the left and right images is desired. In the disclosed embodiment, the value of -3° may lead to a final image that includes the left and right images with a black band in the middle. However, in some applications, the presence of such a band is not desired, and other values for $\Theta_{WG2}^{G}$ can be selected.

The previous set of equations can be solved for the pitch sizes. From the last one:

$$d_2 = \frac{M\lambda}{n_5 \sin \Phi_{WG2}^G + \sin \Theta_{WG2}^G}$$

Replacing in the previous equation, we can get the critical incident angle of the second grating:

$$\sin \Theta_{WG2}^C = -1 + \frac{M\lambda}{d_2}$$

Then, as $\Theta_{WG2}^C = \Theta_{WG1}^G$, $d_1 = \frac{M\lambda}{n_3 \sin \Phi_{WG1}^G + \sin \Theta_{WG1}^G}$ and $\sin \Theta_{WG1}^C = -1 + \frac{M\lambda}{d_1}$.

**U-Shaped Structure with High Refractive Index Inserts**

Example embodiments include an over-wavelength in-coupling grating which can generate intensive high diffraction orders for both transverse-electric (TE) polarization and transverse-magnetic (TM) polarization simultaneously. In contrast to a single material u-shaped system providing intensive response only for one polarization (TE or TM, depending on the size of the elements), using the double material u-shaped system provides a diffraction grating with high response for both polarizations. In some examples, the size of the elements inside the unit cell of a diffraction grating configured for TM polarization is bigger than the size in a case of the grating configured for TE polarization. Keeping the external parameters of the system configured for the TM polarization we can add the inserts with refractive index $n_4$ ($n_4 > n_2$, the ratio between the refractive indexes $n_2$ and $n_4$ is expected to provide a desired nanojet beam radiation angle). The generation of two additional nanojet beams inside each insert in combination with the total internal reflection phenomenon at the external walls of the elements of the unit cell has been found in some embodiments to provide the additional input leading to the high intensity response for TE polarization.

An example topology, as described below, may be represented as a u-shaped structure with the high refractive index inserts providing the high efficiency response of the system. In some embodiments, the sides of a u-shaped structure may be described as ridge regions, and the base of the u-shaped structure may be described as a saddle region, and the inserts may be described as core elements. In examples described herein, $n_1$ is the refractive index of the host medium (e.g. the ambient air), $n_3$ is the refractive index of the substrate and $n_1 < n_3 < n_2 < n_4$.

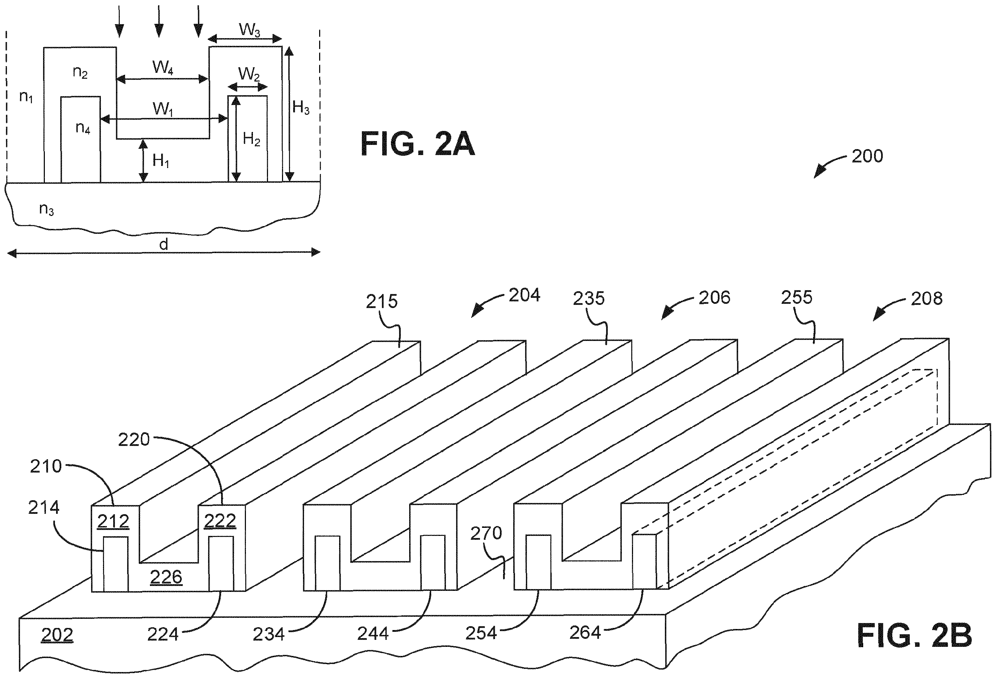

FIG. 2A depicts a cross-sectional view of an example unit cell geometry for a u-shaped diffraction grating with inserts in accordance with some embodiments. A schematic perspective cutaway view of a plurality of u-shaped diffraction grating elements with inserts arranged in a diffraction grating structure is provided in FIG. 2B. In the grating structure of FIG. 2B, the grating elements are substantially straight and are arranged substantially parallel to one another. Although only three grating elements are illustrated in FIG. 2B, some embodiments include thousands of grating elements. A grating structure such as that of FIG. 2B may be employed as a diffractive in-coupler or out-coupler for a waveguide display.

FIG. 2B illustrates a diffractive element 200 that includes a substrate 202. A plurality of grating elements 204, 206, 208 are arranged on the substrate. Each grating element includes a first ridge region 210 having a first ridge body region 212 and a first core element 214. Each grating element further includes a second ridge region 220 having a second ridge body region 222 and a second core element 224. A saddle region 226 extends between the first and second ridge regions. In some embodiments, the first ridge body, the second ridge body, and the saddle region have a first refractive index ($n_2$), and the first core element and second core element have a second refractive index ($n_4$) greater than the first refractive index.

The saddle regions have a first height ($H_1$) lower than a second height ($H_3$) of the first and second ridge regions. In some embodiments, between consecutive grating elements in the diffractive element, the substrate is in contact with a host medium, as illustrated for example at region 270 of the substrate 202. The grating elements may be arranged in a one-dimensional grating array.

The diffractive element 200 of FIG. 2B may alternatively be described as including substrate 202 and a plurality of grating core elements 214, 224, 234, 244, 254, 264 arranged substantially parallel to one another on the substrate, with the grating core elements having the second refractive index ($n_4$). A plurality of overlay elements 215, 235, 255 are arranged substantially periodically, each overlay element contiguously covering two adjacent grating core elements. The overlay elements have a first refractive index ($n_2$) lower than the second refractive index ($n_4$).

In example embodiments, a diffraction grating is provided, where the diffraction grating has u-shaped unit cells that include insert regions. In some embodiments, one or more such diffraction gratings are provided for one or more waveguides in a waveguide display with a wide field of view. In one embodiment, a combination of two waveguides is provided for a monochromatic system working at $\lambda = 460nm$.

In some embodiments, pitch sizes may be selected for the blue color and for a substrate with refractive index $n_3 =$

$n_5$ = 1.52. The elements of the u-shaped diffraction grating with the inserts combine the parts with refractive index $n_2$ = 2.5 and $n_4$ = 3.4. The first grating has a pitch size $d_1$ = 467.1 nm and the U-shaped structure will have $W_1$ = 140nm; $H_1$ = 20nm; $W_2$ = 100nm; $H_2$ = 220nm; $W_3$ = 140nm; $H_3$ = 240nm; $W_4$ = 100nm. For the second example waveguide, the diffraction grating has a pitch size equal to $d_2$ = 605.5 nm and the parameters $W_1$ = 220nm; $H_1$ = 10nm; $W_2$ = 60nm; $H_2$ = 160nm; $W_3$ = 115nm; $H_3$ = 200nm; $W_4$ = 190nm.

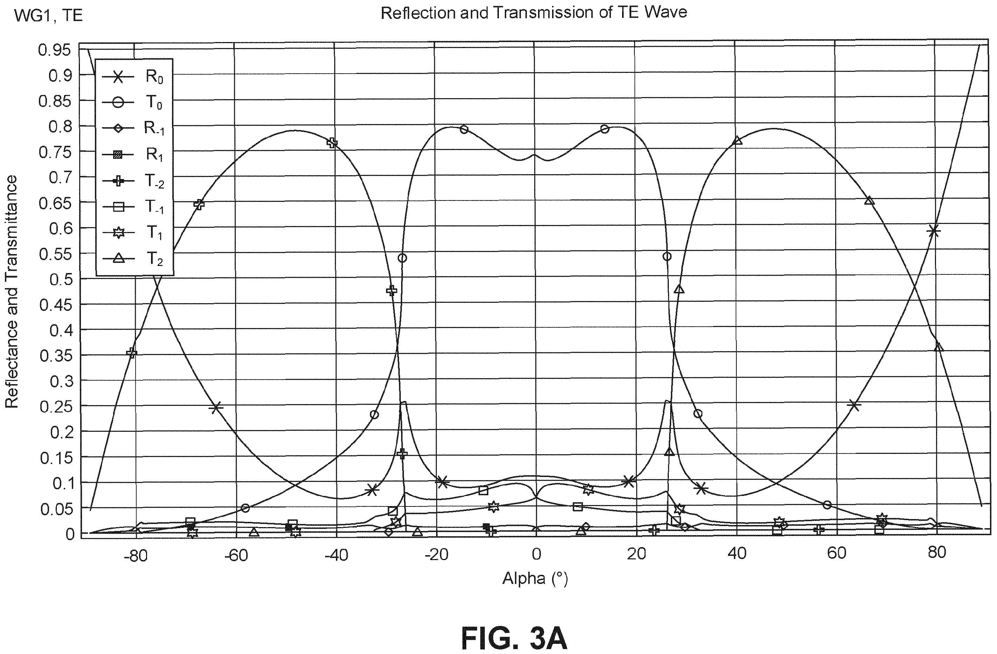

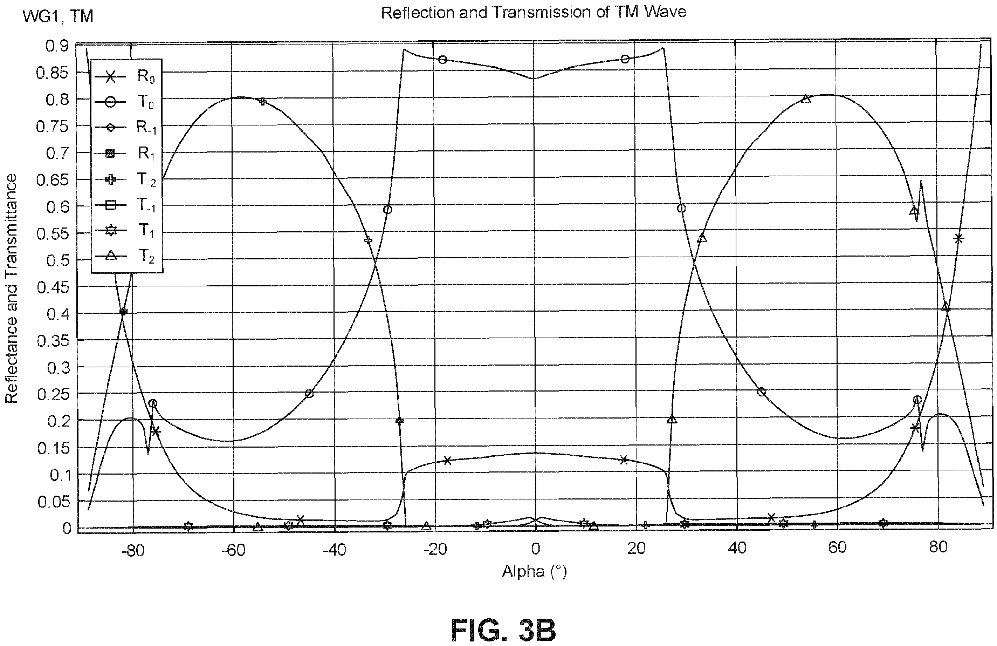

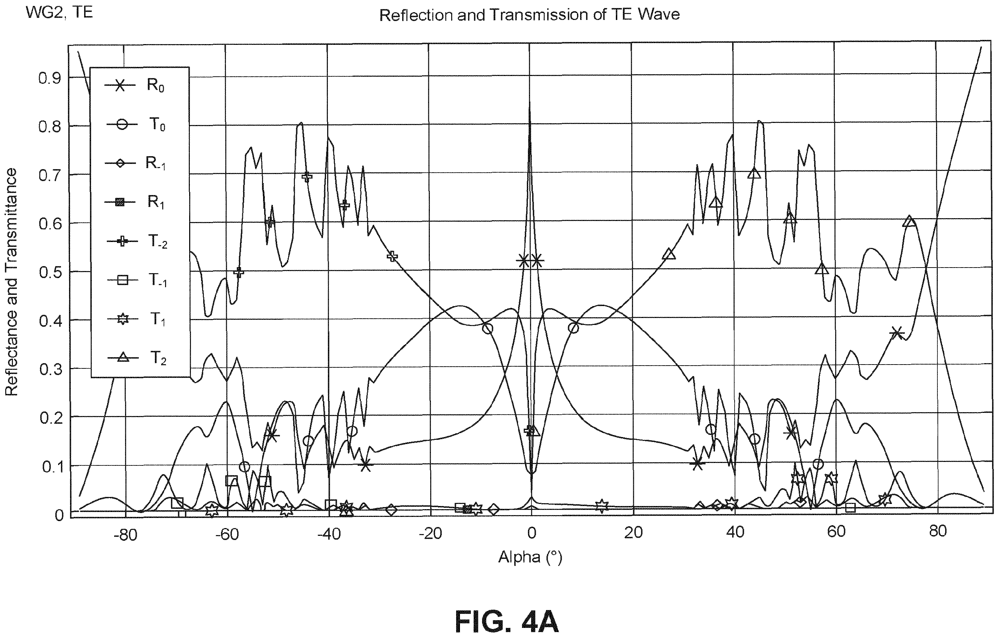

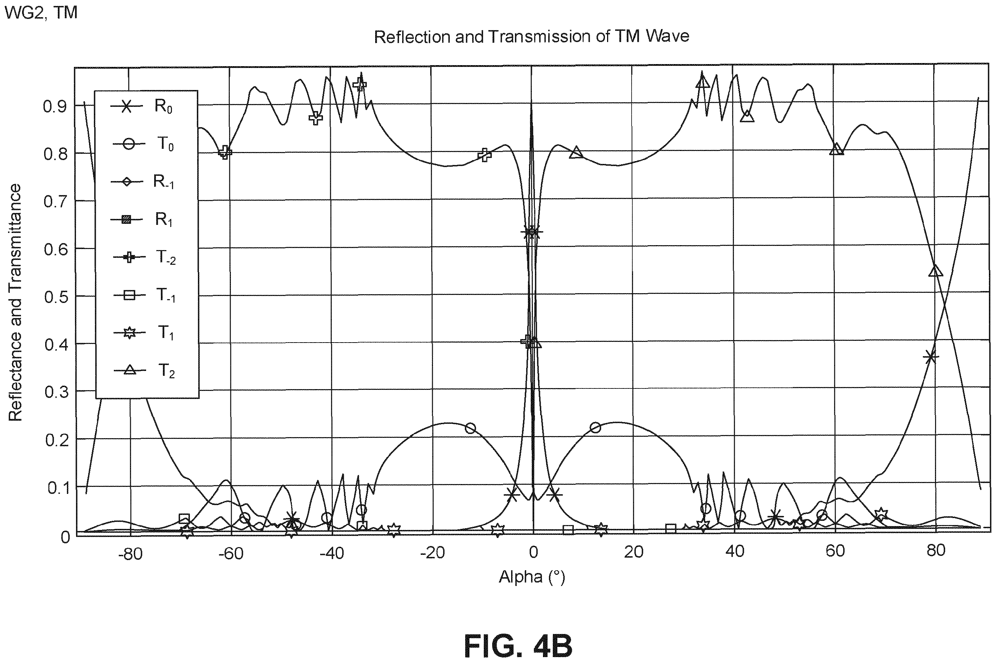

FIG. 3A illustrates the performance of a first diffraction grating of an example two-waveguide system configured for a blue color ($\lambda$=460nm) working with TE polarization. FIG. 3B depicts the performance of the first grating of the example 2-waveguide system working with TM polarized light of the blue color. FIGs. 4A and 4B depict the performance of a second diffraction grating of the example two-waveguide system.

FIGs. 3A and 3B depict diffraction performances of the first grating. The $\pm 2$ diffraction orders have high efficiency and high uniformity for the angular range 30° to 72° (-30° to -72°) and it has a very high transmission efficiency for $\pm 30°$ field of view. In FIGs. 3A-3B, we can observe that in the first waveguide (WG1) we obtain high diffraction efficiency (up to 80% for both polarizations) of $\pm$2nd diffraction orders in the angular range of 30° to 72° (-30° to -72°) and high transmittivity of 0-order at -30° to 30°.

FIGs. 4A-4B illustrate that the second grating for the second waveguide (WG2) provides high diffraction efficiency. For example, FIG. 4A shows about 50% diffraction efficiency for TE polarization of $\pm$2nd diffraction orders in the angular range -30° to 30°. FIG. 4B shows about 80% for TM polarization of $\pm$2nd diffraction orders in the angular range -30° to 30°. FIGs. 4A and 4B illustrate that for the transmitted field of view of $\pm 30°$ through the first grating, we get again very high diffraction efficiencies and uniformities over this angular range.

## Combination of the Waveguides

Some embodiments combine the waveguides for a full RGB system. As it was demonstrated before, analyzing the diffraction performances of the diffraction grating configured for three wavelengths corresponding to red (625nm), green (530nm) and blue (460nm) colors, we can conclude that to get full RGB display system it is enough in some embodiments to use just four waveguides instead of six.

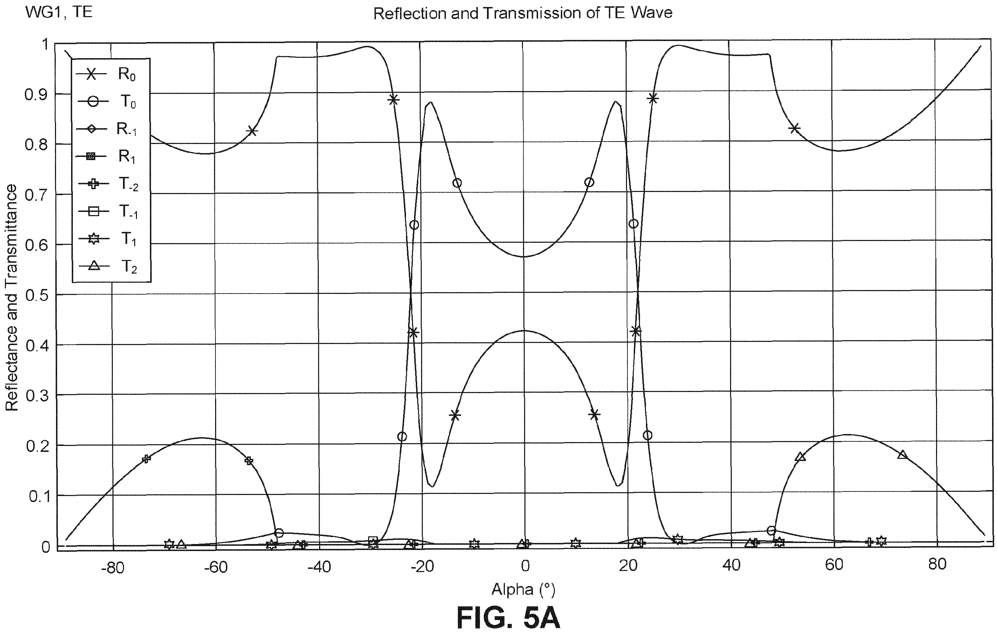

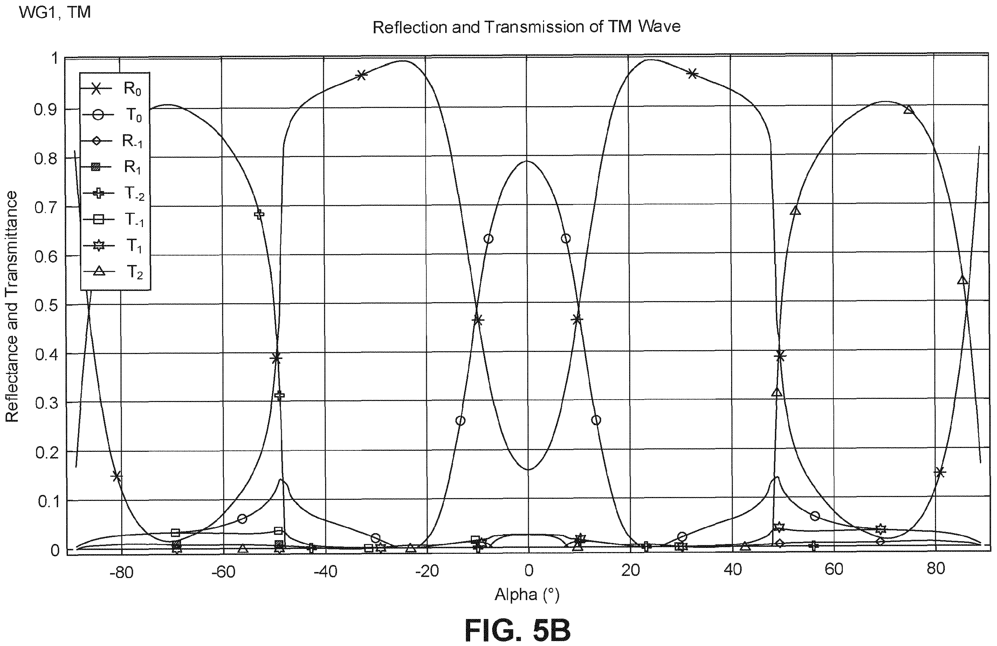

To use two waveguides presented before and configured for a blue color in the full RBG system, the transmittivity of 0 diffraction order is of interest for the waves corresponding to green and red colors. For example, at $\lambda$=530 nm the presented system has very low transmittivity of 0 diffraction order in the angular range 30° to 20° (-30° to -20°), as seen in FIGs. 5A and 5B.

FIGs. 5A and 5B depict diffraction performances of the first grating at $\lambda$=530 nm (green color). FIG. 5A shows reflection and transmission of the TE wave, and FIG. 5B shows reflection and transmission of the TM wave.

It may be noted that the simulations did not take into account the dispersion of material of the inserts at visible wavelengths. This fact can modify, and in some cases improve, the performance of the system.

## High Refractive Index Material U-Shaped Structure

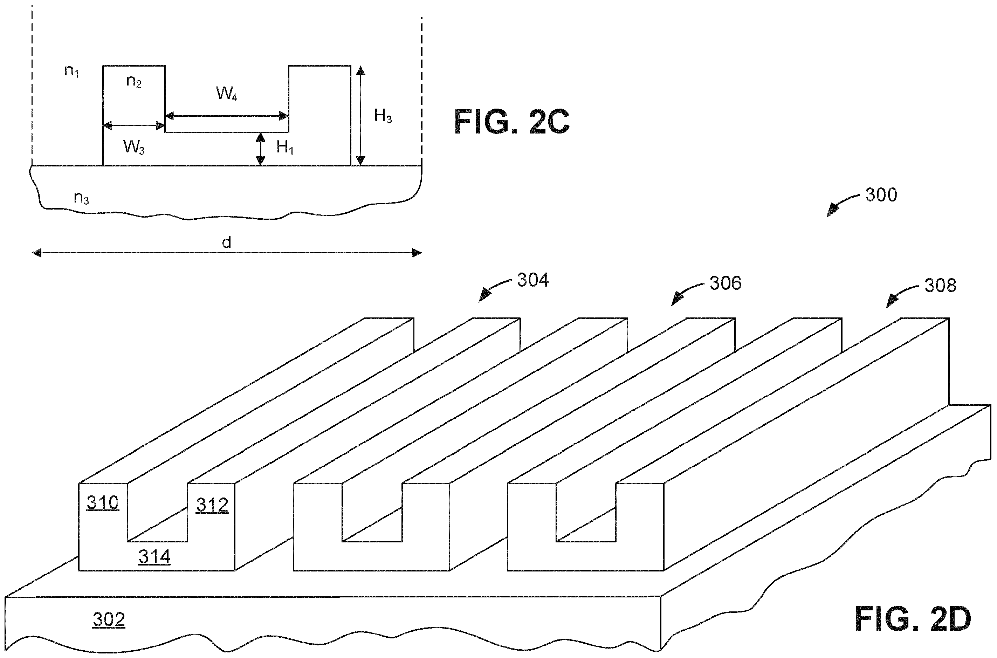

Some embodiments include over-wavelength in-coupling gratings with high refractive index single-material u-shaped elements without inserts that can generate strong $\pm$2nd diffraction orders for both polarizations (TE and TM) simultaneously. A cross-sectional view of a single-material u-shaped element is illustrated in FIG. 2C. A schematic perspective partial cutaway view of a plurality of single-material u-shaped elements arranged in a diffraction grating structure is provided in FIG. 2D. In the grating structure of FIG. 2D, the grating elements are substantially straight and are arranged substantially parallel to one another. In alternative diffractive structures, e.g. for focusing incident light, the grating elements may be curved (e.g. different grating elements may be concentric with one another). Although only three grating elements are illustrated in FIG. 2D, some embodiments include thousands of grating elements. A grating structure such as that of FIG. 2D may be employed as a diffractive in-coupler or out-coupler for a waveguide display.

FIG. 2D illustrates a diffractive optical element 300 that includes a substrate 302. A plurality of grating elements 304, 306, 308 are arranged on the substrate. Each of the grating elements includes a first ridge region 310, a second ridge region 312, and a saddle region 314 extending between the first and second ridge regions. The saddle region has a first height ($H_1$) lower than a second height ($H_3$) of the first and second ridge regions. The saddle region may be contiguous with the ridge regions.

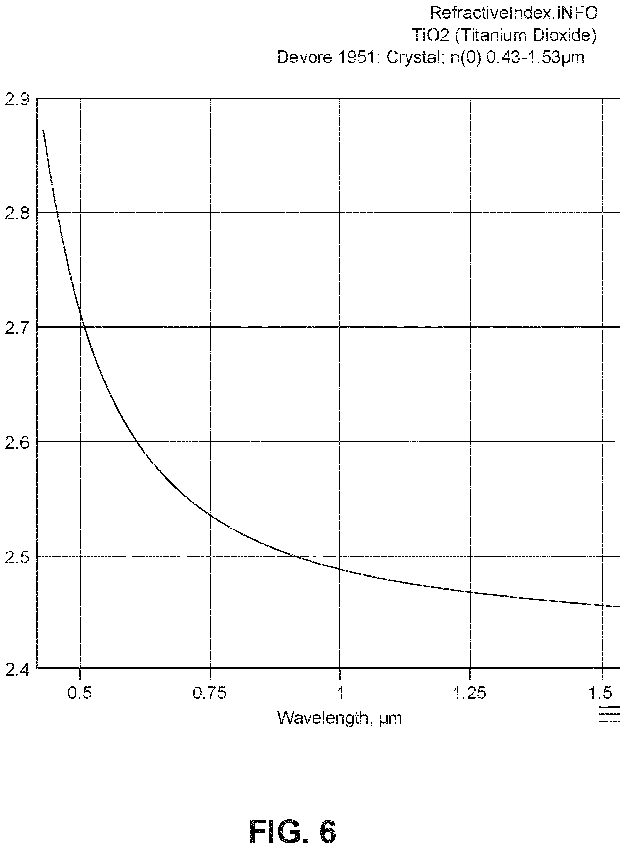

In contrast to prior diffractive grating systems that provide a strong response primarily for one polarization (TE or TM depending on the size of the elements), increasing the refractive index of the elements has been shown to result in a substantially polarization-independent diffraction grating. The presented data were obtained using the COMSOL Multiphysics software. We have configured the system using $TiO_2$ as the material of the u-shaped elements and glass with refractive index $n_3$ = 1.7 as the material of the substrate for all 3 waveguides. The presented numerical simulations take into account the dispersion of $TiO_2$ material as described in J. R. Devore, Refractive indices of rutile and sphalerite, J. Opt. Soc. Am. 41, 416-419 (1951)]. FIG. 6 is a graph showing values of the refractive index of $TiO_2$ over a range of wavelengths.

In accordance with the results of ordinary spectra measurements as shown in FIG. 6, the following refractive index values are obtained for 3 different colors: $n_2$ = 2.7878 for a blue color ($\lambda$ =460nm); $n_2$ = 2.6702 for a green color ($\lambda$ =530nm); and $n_2$ = 2.5884 for a red color ($\lambda$ =625nm).

The set of numerical simulations for the diffraction gratings with high refractive index u-shaped topology configured for both polarizations are presented in the figures discussed below. In the simulations, $n_1$ is the refractive index of host medium and $n_1$ = 1. We have considered a combination of the waveguides as might be employed in a full RGB system. As was described in EP 3588150A1, the use of using three waveguides with the diffraction grating configured for three wavelengths corresponding to red (625nm), green (530nm) and blue (460nm) colors for $n_3$ = 1.7 provides a full RGB system with FoV = 88°.

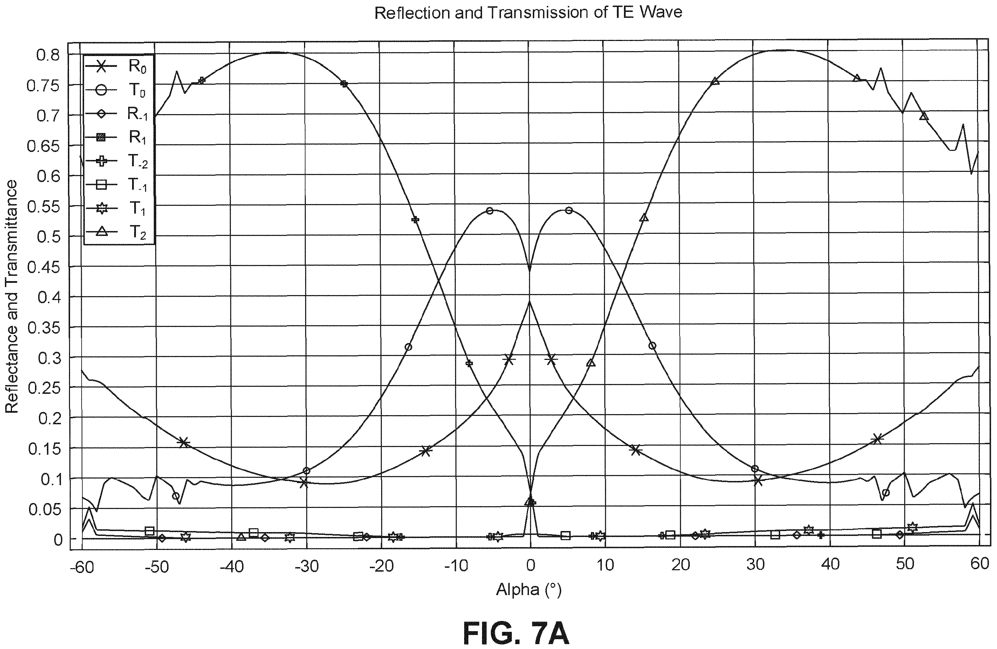

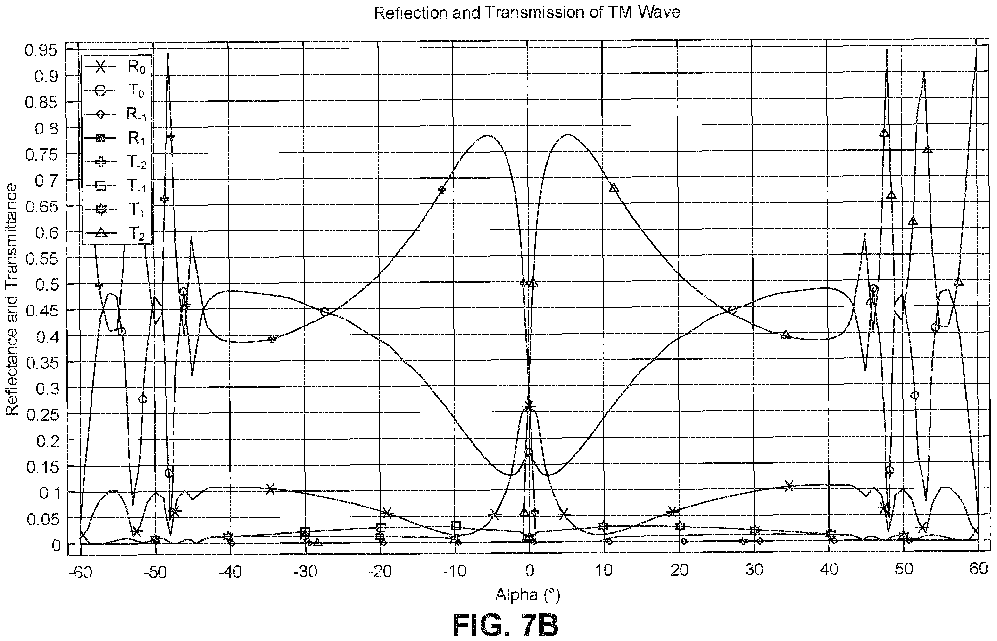

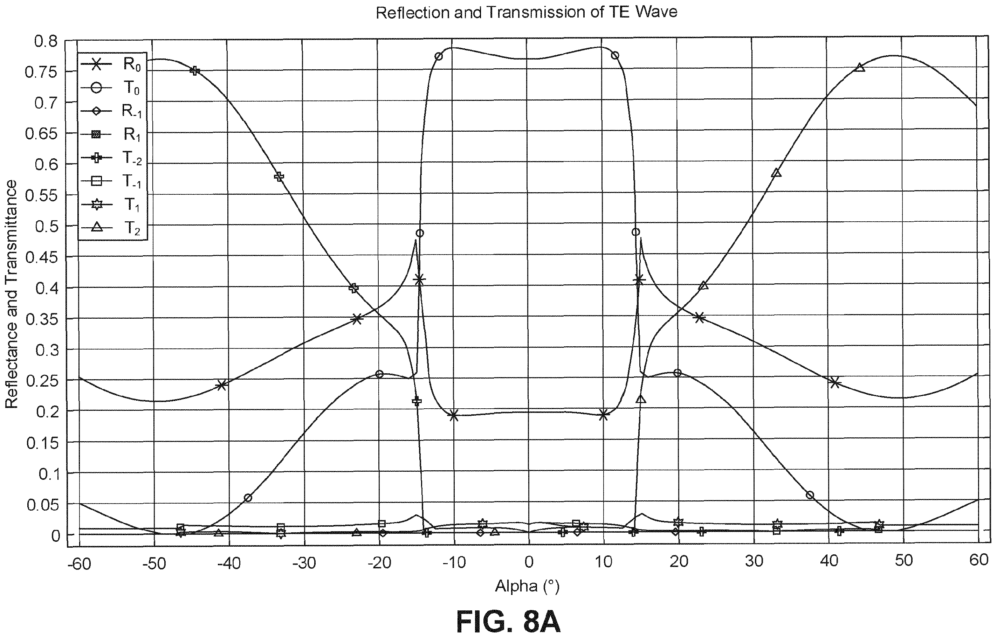

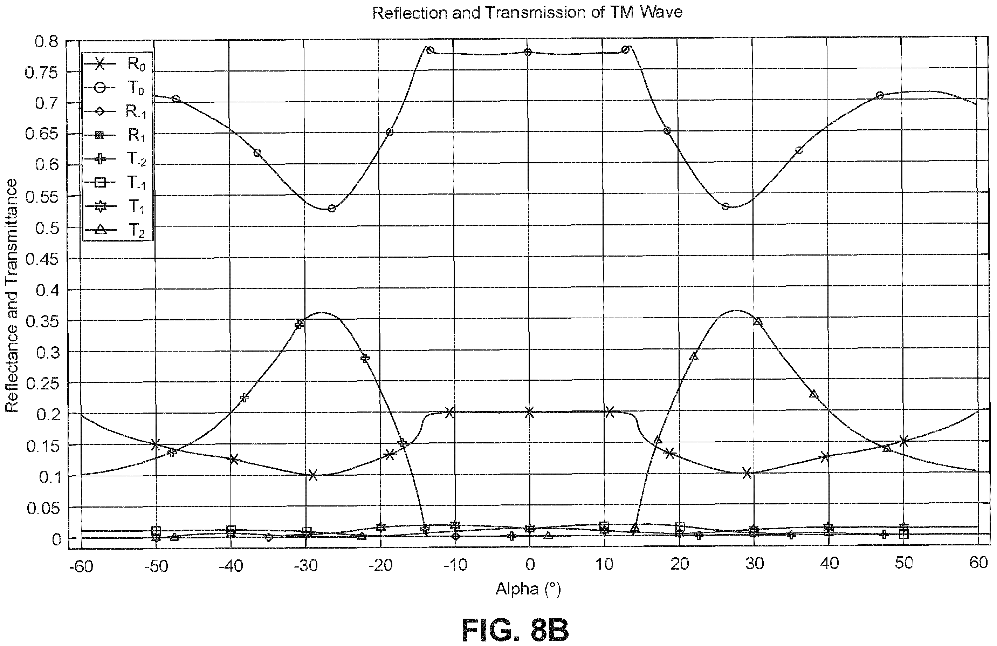

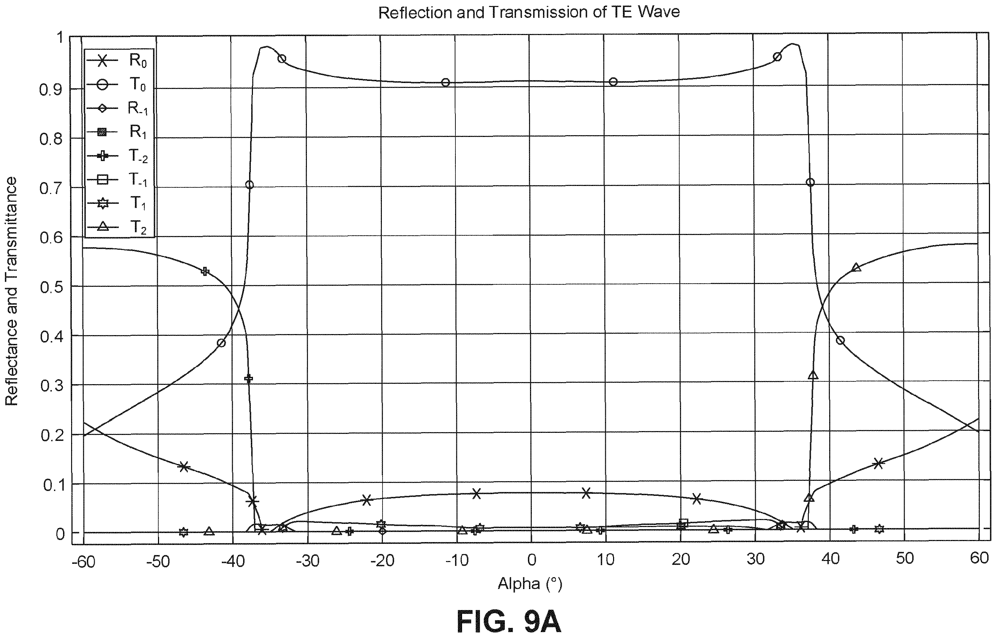

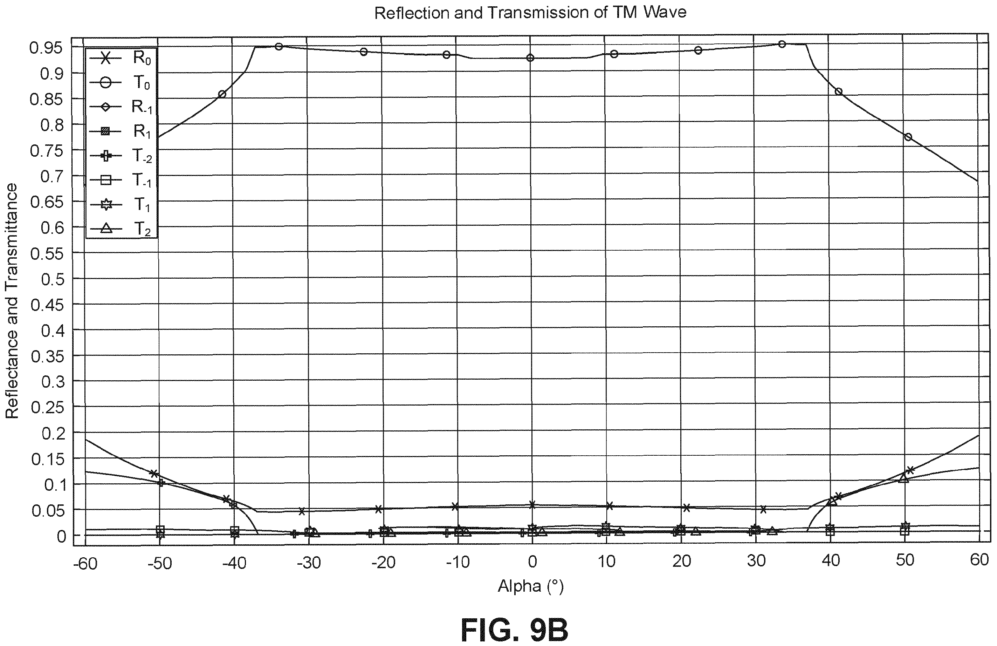

FIGs. 7A and 7B illustrate the diffraction performance for the diffraction grating of the first waveguide (WG1) for a blue color ($\lambda$=460nm). The first grating for the first waveguide (WG1) is configured for the blue color to get high diffraction efficiency of $\pm$2nd diffraction orders in the angular range 0° to 44° (-44° to 0°). The first grating for WG1 has a pitch size $d_1$ = 542.96 nm, and the U-shaped structure has $W_4$ = 150nm; $H_1$ = 10nm; $W_3$ = 110nm; $H_3$ = 180nm. Combining the response for both polarizations we can get quite good diffraction uniformity of the $\pm$2nd order transmitted wave. FIGs. 8A and 8B illustrate the diffraction performance for WG1 for a green color ($\lambda$=530nm). We have obtained that at the wavelength corresponding to the green color (530nm) this diffraction grating in the angular range of 14.6° to 72° (-14.6° to -72°) will provide high diffraction efficiency of $\pm$2nd diffraction orders for both polarizations (up to 77% for TE polarization and up to 36% for TM polarization). We also have high transmittivity (about 80%) of 0-order at -14.6° to 14.6° for both polarizations. In the case of TM polarization, quite high intensity of transmitted 0 order wave can be used to generate intensive $\pm$2nd orders in the next waveguide at the angles above 14.6° and below -14.6°. FIGs. 9A and 9B illustrate the diffraction performance for WG1 for a red color ($\lambda$=625nm). The red color light gets through the first diffraction grating with high transmittivity of 0 order in the angular range -37° to 37°. We also observe high diffraction efficiency of $\pm$2nd diffraction orders for TE polarization at the angles -90° to -37° and 37° to 90°. In the case of TE polarization, the corresponding input of $\pm$2nd diffraction orders will be week (less than 15%).

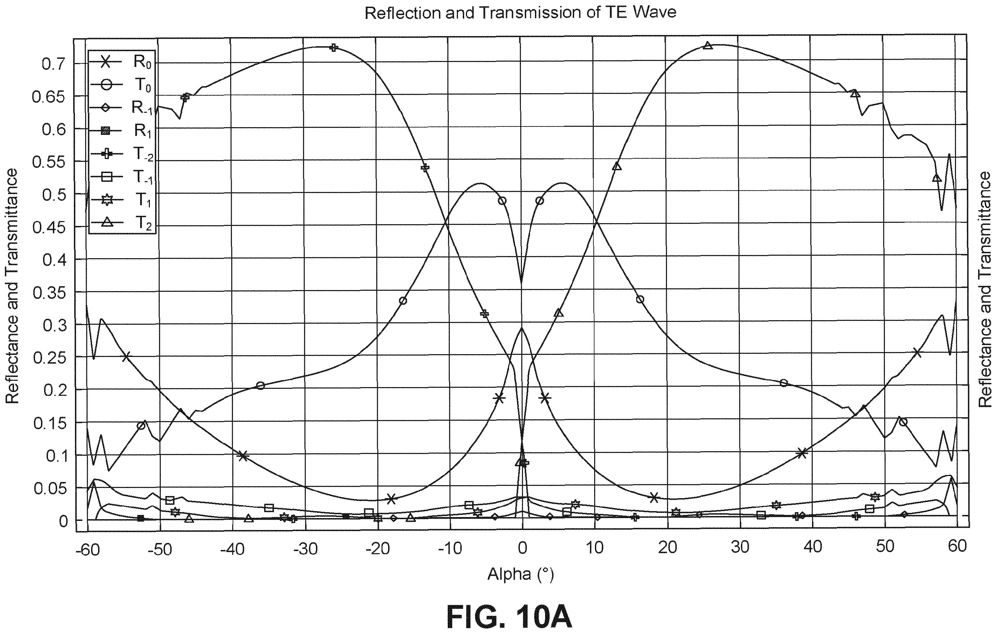

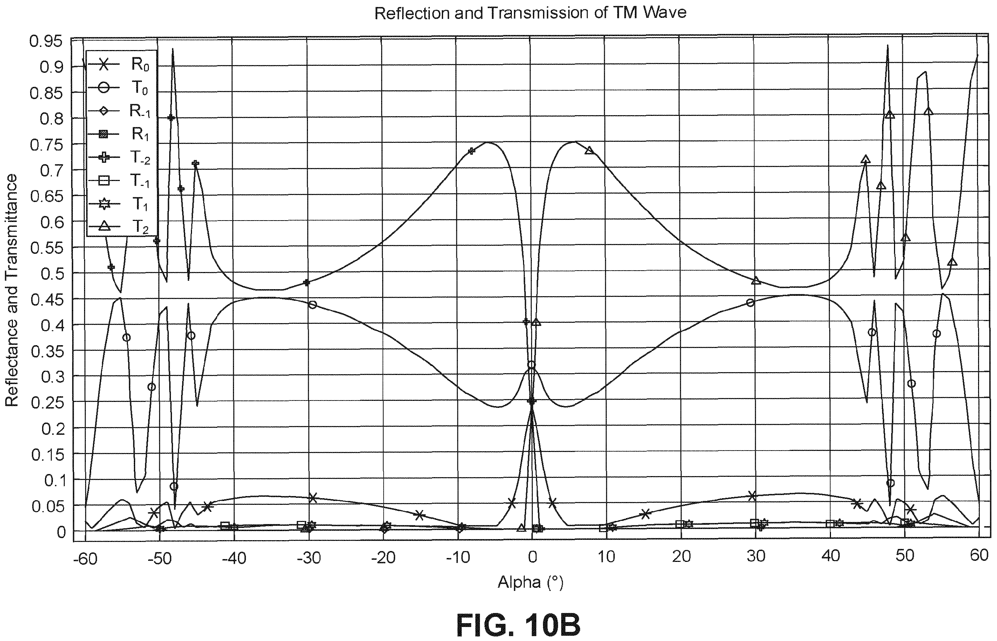

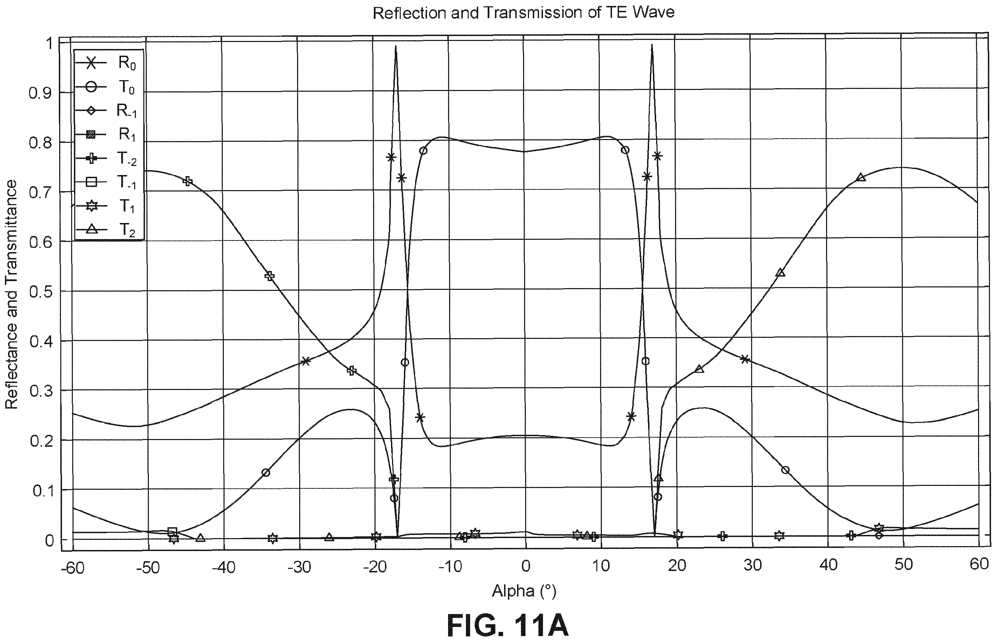

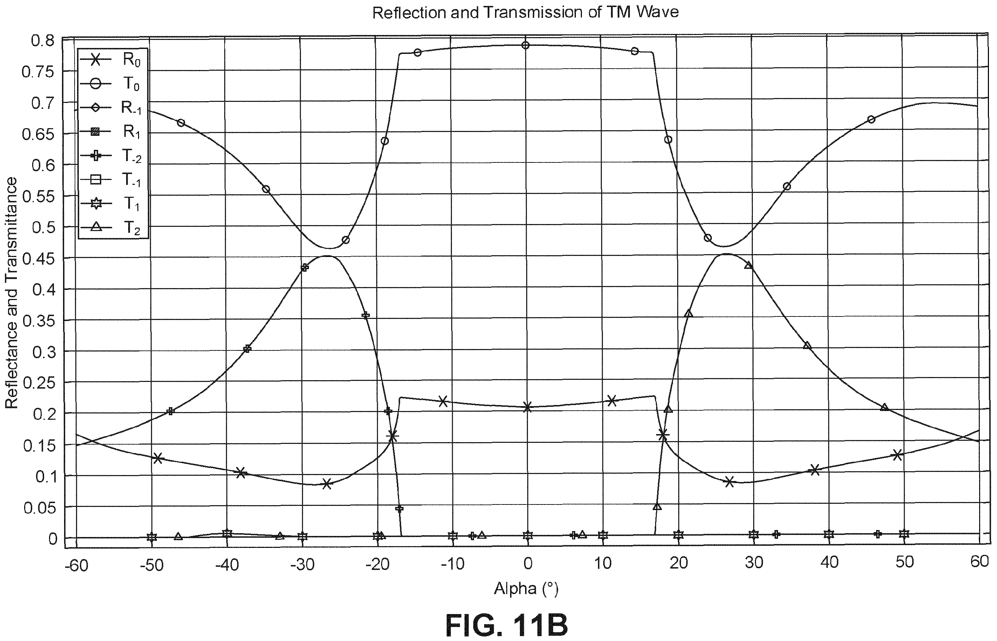

FIGs. 10A and 10B illustrate the diffraction performance of the diffraction grating of the second waveguide (WG2) for a green color ($\lambda$=530nm). The grating for WG2 is configured for the green color to get high diffraction efficiency of $\pm$2nd diffraction orders in the angular range 0° to 44° (-44° to 0°). The grating of WG2 has a pitch size $d_2$ = 625.58nm and such parameters: $W_4$ = 180nm; $H_1$ = 20nm; $W_3$ = 140nm; $H_3$ = 220nm. The combination of the responses for both polarizations will provide high diffraction uniformity of total response. FIGs. 11A and 11B illustrate the diffraction performance for WG2 for a red color ($\lambda$=625nm). We have obtained that for the red color (625nm) this diffraction grating will have intensive $\pm$2nd diffraction orders in the angular range 17° to 86.5° (-86.5° to -17°). Also as in a previous case, the transmittivity of 0-order at -17° to 17° is good. It is quite uniform and about 80% for both polarizations. In a case of TM polarization quite high transmittivity of 0 order at the angles above 17° and below -17° will make an input into the $\pm$2nd diffraction orders generated by the next waveguide.

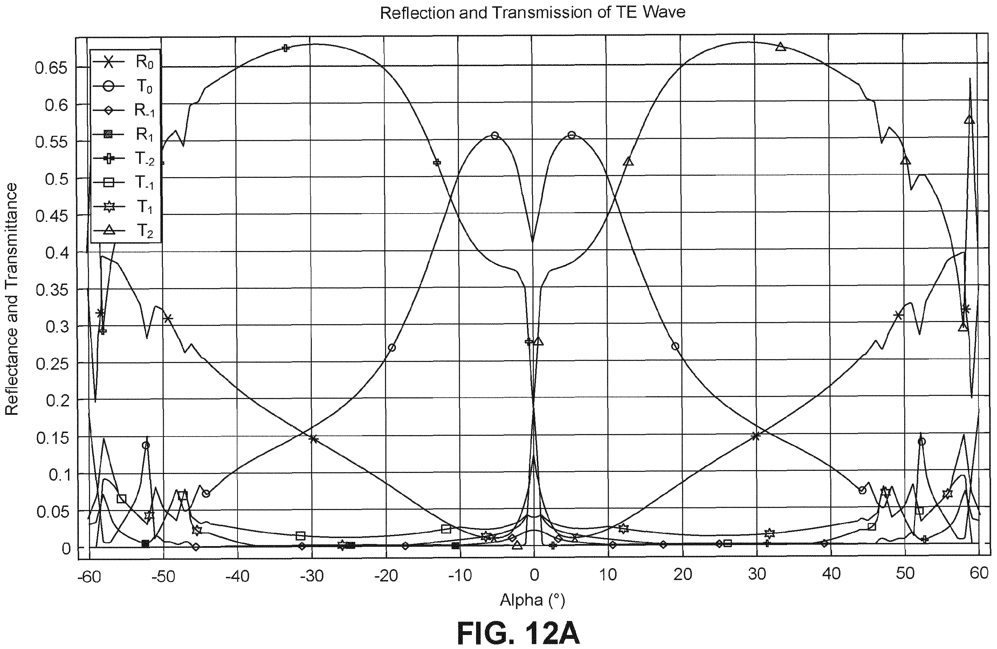

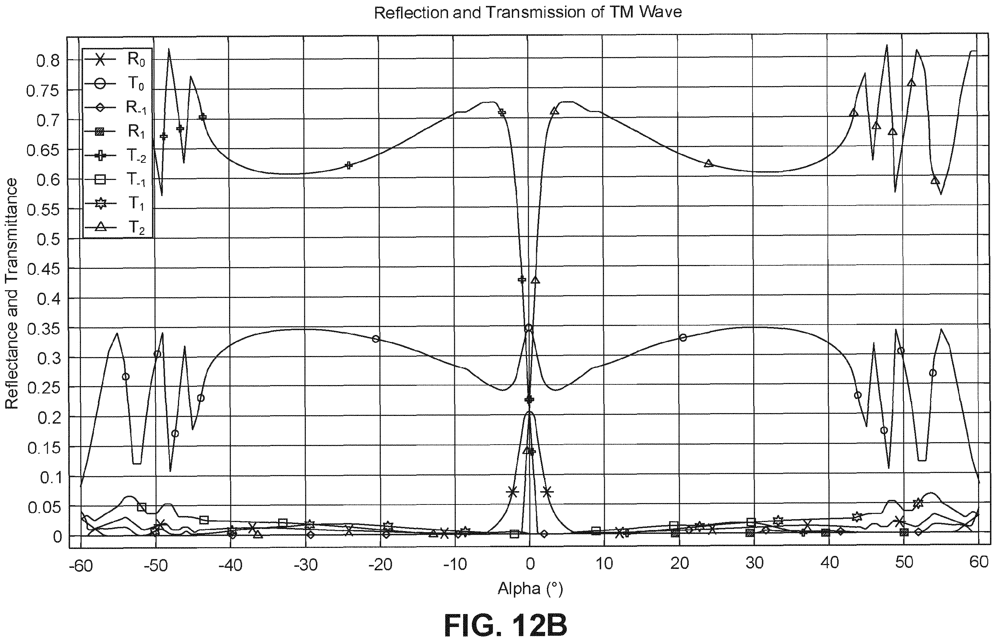

FIGs. 12A and 12B illustrate the diffraction performance for the diffraction grating of the third waveguide (WG3) for a red color ($\lambda$=625nm). The grating for WG3 is configured for the red color with $\lambda$ =625 nm to get high diffraction efficiency of $\pm$2nd diffraction orders in the angular range of 0° to 44° (-44° to 0°). The grating for WG3 has a pitch size $d_3$ = 737.72nm and the U-shaped structure has $W_4$ = 210nm; $H_1$ = 40nm; $W_3$ = 160nm; $H_3$ = 300nm.

**Further Embodiments**

Examples of over-wavelength in-coupling gratings with inserts can generate intensive high diffraction orders for both polarizations (TE and TM) simultaneously. In some embodiments, two waveguides with diffraction gratings configured for a particular wavelength may be implemented in a monochromatic display system with a substantially hemispherical field of view. In some embodiments, the combination of the waveguides with u-shaped grating elements with the inserts may be implemented in a full RGB system. To get the full RGB system, some embodiments may use four waveguides instead of six. The system may be configured to get the proper balance of the system performance by taking into account the pure response of the system at some angles of incidence. To fabricate such diffraction gratings, silicon may be used as the material of the inserts.

We have demonstrated that the embodiments of an over-wavelength in-coupling with a high refractive index dispersive material grating can generate intensive high diffraction orders for both polarizations (TE and TM) simultaneously. Combining three waveguides with diffraction gratings configured for three wavelengths corresponding to red, green, and blue colors we can get full RGB system with high performance. In some embodiments, a full RGB stereoscopic system with wide FoV is implemented using four waveguides instead of six. It is also possible to use three waveguides in a case of higher refractive index for the waveguide material. In some embodiments, an additional waveguide may be used to increase the field of view of the system.

While the above examples refer primarily to the use of couplers configured for visible light, other embodiments are configured for use with longer or shorter wavelengths, such as infrared or ultraviolet light, or for use with waves in other parts of the electromagnetic spectrum. Such embodiments may employ materials that are transparent to the wavelengths for which they are designed.

In various embodiments, a diffraction grating structure as described herein may be used as an in-coupler, an out-coupler, or both. For example, a waveguide may be provided in which a diffraction grating as described herein is used as an in-coupler and another diffraction grating as described herein is used as an out-coupler. In some such embodiments, the in-coupler and out-coupler may have the same pitch and/or may have other optical properties in common.

Embodiments using a u-shaped structure to configure the gratings for the high order of diffraction permit the use of a substantially bigger pitch size, allowing for an ease of manufacture that is difficult to achieve in fabrication with the previous art technology.

In some embodiments, the diffractive element is used as an in-coupler of the first waveguide in a two-waveguide system, such as the system illustrated in FIG. 1F. In such embodiments, the grating elements may be arranged substantially periodically with a pitch between

$$\frac{M_1}{n_3 + n_5 - 1}\lambda$$

and

$$\frac{M_1}{0.8n_3 + 0.8n_5 - 1}\lambda$$

where $M_1$ is an integer representing a diffractive order, $\lambda$ is a wavelength of incident light, and $n_3$ is a refractive index of the substrate for the first waveguide.

In some embodiments, the diffractive element is used as an in-coupler of the second waveguide in a two-waveguide system, such as the system illustrated in FIG. 1F. In such embodiments, the grating elements may be arranged substantially periodically with a pitch between

$$\frac{M_2}{n_5}\lambda$$

and

$$\frac{M_2}{0.8\,n_5}\lambda$$

where $M_2$ is an integer representing a diffractive order, $\lambda$ is a wavelength of incident light, and $n_5$ is a refractive index of the substrate for the second waveguide.

In some embodiments, the grating elements of the first diffraction grating are arranged substantially periodically with a pitch between 160nm and 390nm, with $n_3$ and $n_5$ between 1.5 and 2.0, $M_1$=1, and a wavelength ($\lambda$) of incident light between 460nm and 625nm.

In some embodiments, the grating elements of the first diffraction grating are arranged substantially periodically with a pitch between 320nm and 780nm, with $n_3$ and $n_5$ between 1.5 and 2.0, $M_1$=2, and a wavelength ($\lambda$) of incident light between 460nm and 625nm.

In some embodiments, the grating elements of the second diffraction grating are arranged substantially periodically with a pitch between 170nm and 355nm, with $n_5$ between 1.5 and 2.0, $M_2$=1, and a wavelength ($\lambda$) of incident light between 460nm and 625nm.

In some embodiments, the grating elements of the first diffraction grating are arranged substantially periodically with a pitch between 340nm and 710nm, with $n_3$ between 1.5 and 2.0 and $M_2$=2.

In some embodiments, the grating elements of the diffraction grating are arranged substantially periodically with a pitch between 160nm and 390nm, with $n_3$ and $n_5$ between 1.5 and 2.0, $M_1$=$M_2$=1, and a wavelength ($\lambda$) of incident light between 460nm and 625nm.

In some embodiments, the grating elements of the diffraction grating are arranged substantially periodically with a pitch between 320nm and 780nm, with $n_3$ and $n_5$ between 1.5 and 2.0, $M_1$=$M_2$=2, and a wavelength ($\lambda$) of incident light between 460nm and 625nm.

In some embodiments, the grating elements of the diffraction grating are arranged substantially periodically with a pitch between 160nm and 780nm with $n_3$ and $n_5$ between 1.5 and 2.0, $M_1$ and $M_2$ being either 1 or 2, and a wavelength ($\lambda$) of incident light between 460nm and 625nm.

In some embodiments, the grating elements are arranged substantially periodically with a pitch between 230nm and 520nm with $n_3$ and $n_5$ between 1.5 and 2.0, M=1, and a wavelength ($\lambda$) of incident light between 460nm and 625nm.

In some embodiments, the grating elements are arranged substantially periodically with a pitch between 460nm and 1040nm for $n_3$ between 1.5 and 2.0, M=2, and a wavelength ($\lambda$) of incident light between 460nm and 625nm.

In some embodiments, the grating elements are arranged substantially periodically with a pitch between 230nm and 1040nm for $n_3$ between 1.5 and 2.0, M equal to 1 or 2, where M is the diffraction order for the diffraction gratings, and a wavelength ($\lambda$) of incident light between 460nm and 625nm.

A diffractive element according to some embodiments includes a substrate and a plurality of grating elements on the substrate, each grating element comprising: a first ridge region comprising a first ridge body region and a first core element; a second ridge region comprising a second ridge body region and a second core element; and a saddle region extending between the first and second ridge regions; wherein the first ridge body, the second ridge body, and the saddle region have a first refractive index ($n_2$), and the first core element and second core element have a second refractive index ($n_4$) greater than the first refractive index.

In some embodiments, the substrate has a third refractive index ($n_3$) that is less than the first refractive index ($n_2$).

In some embodiments, the grating elements are arranged substantially periodically on the substrate.

In some embodiments, the grating elements are arranged substantially periodically with a selected pitch, wherein the pitch is selected based on a wavelength, a third refractive index ($n_3$) of the substrate, and a diffraction order.

In some embodiments, the grating elements are arranged substantially periodically with a pitch between $\frac{M_2}{n_5}\lambda$ and $\frac{M_2}{0.8\,n_5}\lambda$, where $M_2$ is an integer (e.g. 1 or 2) representing a diffractive order, $\lambda$ is a wavelength of incident light, and $n_5$ is a refractive index of the substrate for the second waveguide.

In some embodiments, the grating elements are arranged substantially periodically with a pitch between $\frac{M_1}{n_3+n_5-1}\lambda$ and $\frac{M_1}{0.8n_3+0.8n_5-1}\lambda$ where $M_1$ is an integer (e.g. 1 or 2) representing a diffractive order, $\lambda$ is a wavelength of incident light, and $n_3$ is a refractive index of the substrate for the first waveguide.

In some embodiments, the grating elements are arranged substantially periodically with a pitch between 400nm and 800nm.

In some embodiments, the grating elements are arranged substantially periodically with a pitch below 400nm.

In some embodiments, the grating elements are arranged substantially periodically with a pitch above 800nm.

In some embodiments, the first and second ridge regions each have widths between 100nm and 200nm.

In some embodiments, the first and second ridge regions each have a width of between 0.1 and 0.3 of a pitch of the grating elements.

In some embodiments, the saddle region has a first height ($H_1$) and a first width ($W_4$) and the ridge regions each have a second height ($H_3$) and a second width ($W_3$), and wherein $H_1$ is lower than $H_3$; and $H_3 - H_1 \geq \frac{W_3}{\tan\theta'_B}$ with $\theta'_B \approx \theta_B - \frac{\theta_i}{2}$ with $\theta_i$ being an angle of incident light with respect to a normal to a top surface of on said diffraction grating and $\theta_B \approx \frac{90° - \sin^{-1}\left(\frac{n_1}{n_2}\right)}{2}$, $n_1$ being a refractive index of host medium in which the diffractive element is placed.

In some embodiments, the first width ($W_4$) of the saddle region is less than one third of a pitch of the diffractive element.

In some embodiments, the sum of the first width ($W_4$) and twice the second width ($W_3$) is less than a pitch of the diffractive element.

In some embodiments, the first and second core elements each have widths between 50nm and 200nm.

In some embodiments, the first and second core elements each have widths that are between 0.4 and 0.8 as great as the widths of the first and second ridge regions, respectively.

In some embodiments, the first and second core elements are in contact with the substrate.

In some embodiments, between consecutive grating elements in the diffractive element, the substrate is in contact with a host medium.

In some embodiments, the plurality of grating elements are substantially straight and are substantially parallel to one another.

In some embodiments, the plurality of grating elements are arranged in a one-dimensional grating.

In some embodiments, the diffractive element is configured as an input coupler of a waveguide.

In some embodiments, the substrate is made of a material selected from the group consisting of glass, plastic, and a polymer material.

In some embodiments, the substrate has a third refractive index ($n_3$) of $1.5 \pm 5\%$.

In some embodiments, the substrate has a third refractive index ($n_3$) that is no greater than about 1.7.

In some embodiments, the substrate has a third refractive index ($n_3$) that is no greater than about 2.0.

In some embodiments, the first ridge region, the second ridge region, and the saddle region consist essentially of $TiO_2$.

In some embodiments, the first ridge region, the second ridge region, and the saddle region have a first refractive index ($n_2$) of about 2.5.

In some embodiments, the first ridge region, the second ridge region, and the saddle region have a first refractive index ($n_2$) of greater than 2.0.

In some embodiments, the core refractive index ($n_4$) is greater than 2.5.

In some embodiments, the core refractive index ($n_4$) is greater than 2.0.

According to claims 6 and 13, the first and second core elements consist essentially of silicon.

A method of manufacturing a diffractive element according to some embodiments includes: forming, on a substrate, a plurality of grating elements, the forming of each grating element comprising: forming a first core region and a second core region on the substrate; and forming a first ridge body over the first core region, a second ridge body over the second core region, and a saddle region over the substrate between the first core region and the second core region; wherein the first ridge body, the second ridge body, and the saddle region are formed of a material having a first refractive index ($n_2$), and the first core and second core are formed of a material having a core refractive index ($n_4$) greater than the first refractive index.

A diffractive element according to some embodiments comprises: a substrate; a plurality of grating core elements arranged substantially parallel to one another on the substrate, the grating core elements having a core refractive index ($n_4$); and a plurality of overlay elements arranged substantially periodically, each overlay element contiguously covering two adjacent grating core elements, the overlay elements having a first refractive index ($n_2$) lower than the second refractive index ($n_4$).

In some embodiments, each of the grating core elements is substantially covered by one of the overlay elements.

In some embodiments, the core elements are arranged substantially periodically.

In some embodiments, the overlay elements are arranged substantially periodically with a first pitch and the core elements are arranged substantially periodically with a second pitch that is substantially half of the first pitch.

In some embodiments, the overlay elements are substantially parallel to one another and to the grating core elements.

A method of manufacturing a diffractive element according to some embodiments comprises: forming, on a substrate, a plurality of grating core elements arranged substantially parallel to one another on the substrate, the grating core elements having a core refractive index ($n_4$); and forming a plurality of overlay elements, each of the overlay elements contiguously covering two adjacent grating core elements, the overlay elements having a first refractive index ($n_2$) lower than the second refractive index ($n_4$).

A diffractive element according to some embodiments comprises: a substrate; a plurality of grating elements on the substrate, each grating element comprising: a first ridge region; a second ridge region; and a saddle region extending between the first and second ridge regions.

In some embodiments, the grating elements are arranged substantially periodically on the substrate.

In some embodiments, the plurality of grating elements are substantially straight and are substantially parallel to one another.

In some embodiments, the first ridge region, the second ridge region, and the saddle region have a refractive index greater than 2.0 for visible light.

In some embodiments, the first ridge region, the second ridge region, and the saddle region have a refractive index greater than 2.4 for visible light.

In some embodiments, the first ridge region, the second ridge region, and the saddle region have a refractive index of more than 1.2 times as great as a refractive index of the substrate for visible light.

In some embodiments, the first ridge region, the second ridge region, and the saddle region have a refractive index of more than 1.4 times as great as a refractive index of the substrate for visible light.

In some embodiments, the first ridge region, the second ridge region, and the saddle region comprise $TiO_2$.

In some embodiments, the first ridge region, the second ridge region, and the saddle region consist essentially of $TiO_2$.

In some embodiments, the first ridge region, the second ridge region, and the saddle region are made of a dispersive material.

A method of manufacturing a diffractive element according to some embodiments includes: forming, on a substrate, a plurality of grating elements, the forming of each grating element comprising: forming a first ridge on the substrate, a second ridge on the substrate, and a saddle region on the substrate between the ridge and the second ridge.

A method according to some embodiments includes: directing light having a first wavelength onto a diffractive element, wherein the diffractive element comprises: a substrate having a third refractive index ($n_3$); a plurality of grating elements on the substrate, each grating element comprising: a first ridge region comprising a first ridge body region and a first core element; a second ridge region comprising a second ridge body region and a second core element; and a saddle region extending between the first and second ridge regions; wherein the first ridge body, the second ridge body, and the saddle region have a first refractive index ($n_2$), and the first core element and second core element have a second refractive index ($n_4$) greater than the first refractive index.

In some embodiments, the grating elements are arranged substantially periodically with a pitch of between 1.0 and 1.2 times as great as the first wavelength.

In some embodiments, the grating elements are arranged substantially periodically with a pitch between 400nm and 800nm, wherein the third refractive index ($n_3$) is 1.52, and wherein the first wavelength is between 450nm and 700nm.

In some embodiments, the grating elements are arranged substantially periodically with a pitch between 400nm and 800nm, wherein the third refractive index ($n_3$) is $1.5 \pm 5\%$, wherein the first wavelength is between 450nm and 700nm, and wherein the diffractive element diffracts at least a portion of the light into a second diffractive order.

In some embodiments, the light is unpolarized light.

In some embodiments, the light comprises TE-polarized light and TM-polarized light.

In some embodiments, the first ridge region, the second ridge region, and the saddle region have a refractive index of greater than 2.0 and the substrate has a refractive index of less than 2.0.

**Claims**

1. A diffractive element (200) comprising:

   a substrate (202)
   a plurality of grating elements (204) on the substrate (202) each grating element having a u-shaped cross section comprising:

   a first ridge region (210);
   a second ridge region (220); and
   a saddle region (226) extending between the first and second ridge regions, the saddle region having a first height, $H_1$, lower than a second height, $H_3$, of the first and second ridge regions;

   wherein the first ridge region comprises a first ridge body region (212) with a first refractive index $n_2$, and a first core element (214) inside the first ridge body region, the first core element having a second refractive index, $n_4$, greater than the first refractive index; and
   the second ridge region comprises a second ridge body region (222) with the first refractive index $n_2$, and a second core element (224) inside the second ridge body region, the second core element having the second refractive index, $n_4$.

2. The diffractive element of claim 1, wherein the first and second core elements are in contact with the substrate.

3. The diffractive element of claim 1, wherein the substrate has a third refractive index, $n_3$, that is less than the first refractive index, $n_2$.

4. The diffractive element of any of the preceding claims, wherein the grating elements are arranged periodically on the substrate with a grating pitch.

5. The diffractive element of claim 4, wherein the saddle region has a first width, $W_4$, the ridge regions each have a second width, $W_3$, and the sum of the first width, $W_4$, and twice the second width, $W_3$, is less than the grating pitch.

6. The diffractive element of any one of the preceding claims, wherein the first core element and the second core element consist essentially of silicon.

7. The diffractive element of any of the preceding claims, wherein, between consecutive grating elements in the diffractive element, the substrate is in contact with ambient air.

8. The diffractive element of any of the preceding claims, wherein the substrate is a waveguide of a waveguide display.

9. A method comprising:

directing light having a first wavelength, $\lambda$, onto a diffractive element (200), wherein the diffractive element (200) comprises:

a substrate (202);
a plurality of grating elements (204) on the substrate (202), each grating element having a u-shaped cross section comprising:

a first ridge region (210);
a second ridge region (220); and
a saddle region (226) extending between the first and second ridge regions, the saddle region having a first height, $H_1$, lower than a second height, $H_3$, of the first and second ridge regions;

wherein the first ridge region (210) comprises a first ridge body region (212) with a first refractive index $n_2$, and a first core element (214) inside the first ridge body region, the first core element having a second refractive index, $n_4$, greater than the first refractive index; and
the second ridge region (220) comprises a second ridge body region (222) with the first refractive index $n_2$, and a second core element (224) inside the second ridge body region, the second core element having the second refractive index, $n_4$.

10. The method of claim 9, wherein the substrate has a third refractive index, $n_5$, wherein the method further comprises diffracting the light to a diffractive order $M_2$, and wherein the grating elements are arranged substantially periodically with a pitch between

$$\frac{M_2}{n_5}\lambda$$

and

$$\frac{M_2}{0.8\,n_5}\lambda\,.$$

11. The method of claim 10, wherein $M_2 = 2$.

12. The method of any one of claims 9-11, wherein the saddle region has a first width, $W_4$, the ridge regions each have a second width, $W_3$, and the sum of the first width, $W_4$, and twice the second width, $W_3$, is less than the grating pitch.

13. The method of claim 9, wherein the first core element and the second core element consist essentially of silicon.

**Patentansprüche**

1. Beugungselement (200), umfassend:

ein Substrat (202);
mehrere Gitterelemente (204) auf dem Substrat (202), wobei jedes Gitterelement einen u-förmigen Querschnitt aufweist, umfassend:

eine erste Erhöhungsregion (210);
eine zweite Erhöhungsregion (220); und
eine Sattelregion (226), die sich zwischen der ersten und der zweiten Erhöhungsregion erstreckt, wobei die Sattelregion eine erste Höhe, $H_1$, aufweist, die niedriger ist als eine zweite Höhe, $H_3$, der ersten und der zweiten Erhöhungsregion;

wobei die erste Erhöhungsregion eine erste Erhöhungskörperregion (212) mit einem ersten Brechungsindex, $n_2$, und ein erstes Kernelement (214) innerhalb der ersten Erhöhungskörperregion umfasst, wobei das erste Kernelement einen zweiten Brechungsindex, $n_4$, aufweist, der größer als der erste Brechungsindex ist; und die zweite Erhöhungsregion eine zweite Erhöhungskörperregion (222) mit dem ersten Brechungsindex, $n_2$, und ein zweites Kernelement (224) innerhalb der zweiten Erhöhungskörperregion umfasst, wobei das zweite Kernelement den zweiten Brechungsindex, $n_4$, aufweist.

2. Beugungselement nach Anspruch 1, wobei das erste und das zweite Kernelement in Kontakt mit dem Substrat stehen.

3. Beugungselement nach Anspruch 1, wobei das Substrat einen dritten Brechungsindex, $n_3$, aufweist, der kleiner als erste Brechungsindex, $n_2$, ist.

4. Beugungselement nach einem der vorangehenden Ansprüche, wobei die Gitterelemente periodisch auf dem Substrat mit einem Gitterrasterabstand angeordnet sind.

5. Beugungselement nach Anspruch 4, wobei die Sattelregion eine erste Breite, $W_4$, aufweist, die Erhöhungsregionen jeweils eine zweite Breite, $W_3$, aufweisen, und die Summe aus der ersten Breite, $W_4$, und dem Zweifachen der zweiten Breite, $W_3$, kleiner als der Gitterrasterabstand ist.

6. Beugungselement nach einem der vorangehenden Ansprüche, wobei das erste Kernelement und das zweite Kernelement im Wesentlichen aus Silizium bestehen.

7. Beugungselement nach einem der vorangehenden Ansprüche, wobei das Substrat zwischen aufeinanderfolgenden Gitterelementen in dem Beugungselement in Kontakt mit der Umgebungsluft steht.

8. Beugungselement nach einem der vorangehenden Ansprüche, wobei das Substrat ein Wellenleiter eines Wellenleiter-Displays ist.

9. Verfahren, das umfasst:
Richten von Licht, das eine erste Wellenlänge, $\lambda$, aufweist, auf ein Beugungselement (200), wobei das Beugungselement (200) umfasst:

ein Substrat (202);
mehrere Gitterelemente (204) auf dem Substrat (202), wobei jedes Gitterelement einen u-förmigen Querschnitt aufweist, umfassend:

eine erste Erhöhungsregion (210);
eine zweite Erhöhungsregion (220); und
eine Sattelregion (226), die sich zwischen der ersten und der zweiten Erhöhungsregion erstreckt, wobei die Sattelregion eine erste Höhe, $H_1$, aufweist, die niedriger ist als eine zweite Höhe, $H_3$, der ersten und der zweiten Erhöhungsregion;

wobei die erste Erhöhungsregion (210) eine erste Erhöhungskörperregion (212) mit einem ersten Brechungsindex, $n_2$, und ein erstes Kernelement (214) innerhalb der ersten Erhöhungskörperregion umfasst, wobei das erste Kernelement einen zweiten Brechungsindex, $n_4$, aufweist, der größer als der erste Brechungsindex ist; und die zweite Erhöhungsregion (220) eine zweite Erhöhungskörperregion (222) mit dem ersten Brechungsindex, $n_2$, und ein zweites Kernelement (224) innerhalb der zweiten Erhöhungskörperregion umfasst, wobei das zweite Kernelement den zweiten Brechungsindex, $n_4$, aufweist.

10. Verfahren nach Anspruch 9, wobei das Substrat einen dritten Brechungsindex, $n_5$, aufweist, wobei das Verfahren des Weiteren das Beugen des Lichts bis zu einer Beugungsordnung $M_2$ umfasst, und wobei die Gitterelemente im Wesentlichen periodisch mit einem Rasterabstand angeordnet sind zwischen

16

$$\frac{M_2}{n_5}\lambda$$

und

$$\frac{M_2}{0.8\,n_5}\lambda\,.$$

**11.** Verfahren nach Anspruch 10, wobei $M_2 = 2$.

**12.** Verfahren nach einem der Ansprüche 9-11, wobei die Sattelregion eine erste Breite, $W_4$, aufweist, die Erhöhungsregionen jeweils eine zweite Breite, $W_3$, aufweisen, und die Summe aus der ersten Breite, $W_4$, und dem Zweifachen der zweiten Breite, $W_3$, kleiner als der Gitterrasterabstand ist.

**13.** Verfahren nach Anspruch 9, wobei das erste Kernelement und das zweite Kernelement im Wesentlichen aus Silizium bestehen.

## Revendications

**1.** Elément de diffraction (200) comprenant :

un substrat (202) ;
une pluralité d'éléments de réseau (204) sur le substrat (202), chaque élément de réseau présentant une coupe transversale en forme de U comprenant :

une première région d'arête (210) ;
une deuxième région d'arête (220) ; et
une région de selle (226) s'étendant entre les première et deuxième régions d'arête, la région de selle présentant une première hauteur, $H_1$, inférieure à une deuxième hauteur, $H_3$, des première et deuxième régions d'arête ;

dans lequel la première région d'arête comprend une première région de corps d'arête (212) avec un premier indice de réfraction, $n_2$, et un premier élément de cœur (214) à l'intérieur de la première région de corps d'arête, le premier élément de cœur présentant un deuxième indice de réfraction, $n_4$, supérieur au premier indice de réfraction ; et
la deuxième région d'arête comprend une deuxième région de corps d'arête (222) avec le premier indice de réfraction, $n_2$, et un deuxième élément de cœur (224) à l'intérieur de la deuxième région de corps d'arête, le deuxième élément de cœur présentant le deuxième indice de réfraction, $n_4$.

**2.** Elément de diffraction selon la revendication 1, dans lequel les premier et deuxième éléments de cœur sont en contact avec le substrat.

**3.** Elément de diffraction selon la revendication 1, dans lequel le substrat présente un troisième indice de réfraction, $n_3$, qui est inférieur au premier indice de réfraction, $n_2$.

**4.** Elément de diffraction selon l'une quelconque des revendications précédentes, dans lequel les éléments de réseau sont agencés périodiquement sur le substrat avec un pas de réseau.

**5.** Elément de diffraction selon la revendication 4, dans lequel la région de selle présente une première largeur, $W_4$, chacune des régions d'arête présente une deuxième largeur, $W_3$, et la somme de la première largeur, $W_4$, et de deux fois la deuxième largeur, $W_3$, est inférieure au pas de réseau.

**6.** Elément de diffraction selon l'une quelconque des revendications précédentes, dans lequel le premier élément de cœur et le deuxième élément de cœur sont sensiblement constitués de silicium.

**7.** Elément de diffraction selon l'une quelconque des revendications précédentes, dans lequel, entre des éléments de réseau consécutifs dans l'élément de diffraction, le substrat est en contact avec l'air ambiant.

**8.** Elément de diffraction selon l'une quelconque des revendications précédentes, dans lequel le substrat est un guide d'onde d'un dispositif d'affichage à guide d'onde.

**9.** Procédé comprenant :
le fait de diriger une lumière présentant une première longueur d'onde, $\lambda$, sur un élément de diffraction (200), dans lequel l'élément de diffraction (200) comprend :

un substrat (202) ;
une pluralité d'éléments de réseau (204) sur le substrat (202), chaque élément de réseau présentant une coupe transversale en forme de U comprenant :

une première région d'arête (210) ;
une deuxième région d'arête (220) ; et
une région de selle (226) s'étendant entre les première et deuxième régions d'arête, la région de selle présentant une première hauteur, $H_1$, inférieure à une deuxième hauteur, $H_3$, des première et deuxième régions d'arête ;

dans lequel la première région d'arête (210) comprend une première région de corps d'arête (212) avec un premier indice de réfraction $n_2$, et un premier élément de cœur (214) à l'intérieur de la première région de corps d'arête, le premier élément de cœur présentant un deuxième indice de réfraction, $n_4$, supérieur au premier indice de réfraction ; et
la deuxième région d'arête (220) comprend une deuxième région de corps d'arête (222) avec le premier indice de réfraction, $n_2$, et un deuxième élément de cœur (224) à l'intérieur de la deuxième région de corps d'arête, le deuxième élément de cœur présentant le deuxième indice de réfraction, $n_4$.

**10.** Procédé selon la revendication 9, dans lequel le substrat présente un troisième indice de réfraction, $n_5$, dans lequel le procédé comprend en outre la diffraction de la lumière à un ordre de diffraction, $M_2$, et dans lequel les éléments de réseau sont agencés sensiblement périodiquement avec un pas entre

$$\frac{M_2}{n_5}\lambda$$

et

$$\frac{M_2}{0,8n_5}\lambda.$$

**11.** Procédé selon la revendication 10, dans lequel $M_2 = 2$.

**12.** Procédé selon l'une quelconque des revendications 9 à 11, dans lequel la région de selle présente une première largeur, $W_4$, chacune des régions d'arête présente une deuxième largeur, $W_3$, et la somme de la première largeur, $W_4$, et de deux fois la deuxième largeur, $W_3$, est inférieure au pas de réseau.

**13.** Procédé selon la revendication 9, dans lequel le premier élément de cœur et le deuxième élément de cœur sont sensiblement constitués de silicium.

**FIG. 1A**

EP 4 127 789 B1

FIG. 1B

FIG. 1C

IMAGE GENERATOR

FIG. 1E

FIG. 1D

**FIG. 1F**

EP 4 127 789 B1

FIG. 2A

FIG. 2B

**FIG. 2C**

**FIG. 2D**

EP 4 127 789 B1

Reflection and Transmission of TE Wave

**FIG. 3A**

Reflection and Transmission of TM Wave

WG1, TM

Reflectance and Transmittance

Alpha (°)

Legend: $R_0$, $T_0$, $R_{-1}$, $R_1$, $T_{-2}$, $T_{-1}$, $T_1$, $T_2$

**FIG. 3B**

WG2, TE

Reflection and Transmission of TE Wave

FIG. 4A

Reflection and Transmission of TM Wave

**FIG. 4B**

FIG. 5A

WG1, TM

FIG. 5B

EP 4 127 789 B1

RefractiveIndex.INFO
TiO2 (Titanium Dioxide)
Devore 1951: Crystal; n(0) 0.43-1.53μm

FIG. 6

Reflection and Transmission of TE Wave

**FIG. 7A**

EP 4 127 789 B1

Reflection and Transmission of TM Wave

FIG. 7B

EP 4 127 789 B1

Reflection and Transmission of TE Wave

FIG. 8A

Alpha (°)

Reflectance and Transmittance

34

Reflection and Transmission of TM Wave

FIG. 8B

EP 4 127 789 B1

FIG. 9A

EP 4 127 789 B1

Reflection and Transmission of TM Wave

FIG. 9B

FIG. 10A

EP 4 127 789 B1

Reflection and Transmission of TM Wave

FIG. 10B

EP 4 127 789 B1

Reflection and Transmission of TE Wave

FIG. 11A

Reflection and Transmission of TM Wave

**FIG. 11B**

EP 4 127 789 B1

FIG. 12A

EP 4 127 789 B1

Reflection and Transmission of TM Wave

FIG. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017180403 A
- US 20160231568 A
- US 10534115 B1
- EP 3588150 A1

**Non-patent literature cited in the description**

- **J. R. DEVORE**. Refractive indices of rutile and sphalerite. *J. Opt. Soc. Am.*, 1951, vol. 41, 416-419